(19) Europäisches Patentamt
European Patent Office
Office européen des brevets

(11) EP 1 772 471 B1

# (12) EUROPEAN PATENT SPECIFICATION

(45) Date of publication and mention of the grant of the patent:
**03.03.2010 Bulletin 2010/09**

(51) Int Cl.:
***C08F 222/10*** (2006.01)

(21) Application number: **06119347.0**

(22) Date of filing: **23.08.2006**

(54) **Radiation-curable composition and cured product thereof**

Durch Radiation vernetzbare Zusammensetzungen und daraus hergestelte vernetzte Produkte

Composition reticulable par radiation et produit reticules issus de celles-ci

(84) Designated Contracting States:
**DE FR GB**

(30) Priority: **24.08.2005 JP 2005243298**

(43) Date of publication of application:
**11.04.2007 Bulletin 2007/15**

(73) Proprietor: **Nippon Shokubai Co.,Ltd.**
**Osaka-shi, Osaka 541-0043 (JP)**

(72) Inventors:
- **YOSHIMUNE, Masanori**
  **ASHIYA-SHI, HYOGO 659-0012 (JP)**
- **KAWATA, Yuichi**
  **YAWATA-SHI, KYOTO 614-8323 (JP)**
- **FUKADA, Akihiko**
  **NISHINOMIYA-SHI, HYOGO 669-1142 (JP)**

(74) Representative: **Hart-Davis, Jason et al**
**Cabinet Beau de Loménie**
**158, rue de l'Université**
**75340 Paris Cedex 07 (FR)**

(56) References cited:
**EP-A1- 1 106 627 US-A- 5 888 649**

EP 1 772 471 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

Printed by Jouve, 75001 PARIS (FR)

## Description

TECHNICAL FIELD

The present invention relates to a radiation-curable composition and a cured product thereof. More specifically, the present invention relates to a radiation-curable composition widely used in various applications such as optical members (optical display devices), lighting members (lighting apparatus), automobile members (vehicle members), building materials, and optical parts.

BACKGROUND ART

Radiation-curable compositions are used after cured by radiation energy such as electromagnetic wave, ultraviolet radiation, visible radiation, infrared radiation, electron ray, and gamma ray. Such radiation-curable compositions are excellent in molding workability as compared with that in transparent inorganic materials such as glass, and therefore have been widely used in various applications such as optical members, lighting members, and automobile members. In these applications, cured products need to particularly have a property of hardly causing coloring, deterioration, or degradation to light from a light source with a wavelength distribution from a short wavelength region of visible light to an ultraviolet region, that is, light resistance. However, such cured products also need to have high transparency and sufficient curing strength in order to exhibit higher appearance and to be excellent in practical utility. In these applications, such cured products need to have a resistance to soil, that is, stain resistance, as well as high transparency, light resistance, and sufficient curing strength. However, cured products prepared using conventional curable compositions satisfy these requirements insufficiently.

Curable (meth) acrylic compositions have been known as a conventional radiation-curable composition. Specifically, disclosed is an optical part formed by a curable (meth) acrylic composition containing dimethacrylate of bisphenol A modified with an ethylene oxide; diacrylate of an ester of hydroxy pivalic acid and neopentyl glycol; and phenoxy (ethoxy) ethyl acrylate (for example, referring to Japanese Kokai Publication No. Hei-06-263831, page 2). However, a cured product (transparent resin) produced by curing such a composition is insufficient in light resistance and in discoloration or deterioration over time as compared with those of transparent inorganic materials such as glass. Therefore, such a composition has room for improvement in order to be useful in much more applications. In order to be useful in much more applications, the composition needs to: have improved light resistance, thereby being used preferably in optical members such as solar battery and outdoor electrical scoreboard, which can be directly exposed to sunlight at the time of use, or optical members such as light emitting diode, optical cable, and display device, which uses a light source having a wavelength distribution from a short wavelength region of visible light to an ultraviolet region; and have sufficiently improved stain resistance.

Also, disclosed is a photocurable composition comprising alkylene(oxy)di(meth)acrylate, a predetermined photopolymerization initiator, and a predetermined ultraviolet absorber at a predetermined ratio (for example, referring to Japanese Kokai Publication No. Hei-04-180904, page 1). However, a cured product (transparent resin) produced by curing such a composition does not sufficiently satisfies all of the light resistance, the transparency, and the curability. Therefore, such a composition has room for improvement in order to be preferably used in many applications in addition to the optical members, the lighting members, and automobile members, by improving the above-mentioned respect and also the stain resistance sufficiently, thereby being excellent in practical utility.

(Meth) acrylic resin compositions among conventional radiation-curable compositions have been preferably used in various applications, because curedproducts of the compositions have excellent performances such as light resistance, transparency, and durability. For example, such cured products have been widely used in optical display devices or lighting apparatus as an acrylic plate, or in automobile components, building materials, optical components as a molded component. However, (meth)acrylic resin compositions are insufficient in light resistance as compared with transparent inorganic materials such as glass. Therefore, improvement methods have been variously examined in order to prevent reduction in the commodity value over time.

With respect to a conventional (meth)acrylic resin composition, disclosed is a (meth) acrylic resin composition in which a compound having a polymerizable unsaturated double bond and/or a specific functional group and a (meth) acrylic ester compound are combined, the (meth)acrylic ester compound being obtained by preparing polymer emulsion particles using a power feed emulsion polymerization method capable of continuously varying a polymer composition inside a polymer emulsion particle, and by drying the particle surface by a spray dry method (for example, referring to Japanese Kokai Publication No. 2002-3546, page 2). However, this resin composition is insufficient in performance of suppressing reduction in physical properties over time, that is, durability, and therefore has room for improvement in order to be preferably used in various applications by improving this respect.

SUMMARY OF THE INVENTION

The present invention has been made in view of the above-mentioned state of the art. The present invention has an object to provide: a radiation-curable composition which can provide a cured product capable of sufficiently satisfying all of light resistance, stain resistance, demolding property, optical property (transparency), curability, moldability (smoothness, anti-mold fouling property), and durability, and which can be useful in much more applications in addition to optical members, lighting members, automobile members, for example; and a cured product of such a composition.

The present inventors have made various investigations about radiation-curable compositions. They have found that if an initial light transmittance and a light transmittance retention in a cured product produced by curing the curable composition by a specific radiation energy are set to predetermined values, respectively, provided can be a curable composition capable of providing a cured product having excellent transparency, hardly causing coloring, deterioration, and degradation to light from a light source with a wavelength distribution from a short wavelength region of visible light to an ultraviolet region, that is, having high "light resistance", and having sufficient curing strength. These findings have now led to solution of the above-mentioned problems. If a photopolymerization initiator is added to a general curable composition, the light resistance or the transmittance in a short wavelength region of visible light may be insufficient due to the addition of the photopolymerization initiator. However, they have found that use of the curable composition of the present invention makes it possible to sufficiently reduce the addition amount of the photopolymerization initiator, and therefore, the light resistance and the transmittance in a short wavelength region of visible light is more improved, and thereby the curable composition can be preferable in many applications. They have also found that if such a radiation-curable composition comprises a specific (meth)acrylic esterified product, or a specific content of a sulfonic acid (salt) and/or a sulfonic ester, the addition amount of the photopolymerization initiator can be significantly reduced. And they have found that due to the reduction, the functional effects of the present invention can be sufficiently exhibited. Thereby, the present invention has been completed.

The present inventors have made various investigations about radiation-curable compositions. They have found that if an initial light transmittance and a surface tension in a cured product obtained by curing the curable composition are specified to predetermined values, respectively, provided is a curable composition which can provide a cured product capable of sufficiently exhibiting not only high transparency but also stain resistance or demolding property. These findings have now led to solution of the above-mentioned problems. They have also found that if a light transmittance retention in the curedproduct produced by curing such a radiation-curable composition is set to predetermined values, provided is a radiation-curable composition capable of providing a cured product hardly causing coloring, deterioration, and degradation to light from a light source with a wavelength distribution from a short wavelength region of visible light to an ultraviolet region, that is, having high "light resistance". They have also found that if such a radiation-curable composition comprises a polyether-modified silicone oil or a specific (meth)acrylic esterified product, demolding property is provided for the composition, for example. Thereby, the composition sufficiently exhibits the functional effects of the present invention, and therefore becomes more useful in various applications. Thereby, the present invention has been completed.

The present inventors have made various investigations about (meth)acrylic resin compositions among the radiation-curable compositions. They have found that if a radiation-curable composition is a (meth) acrylic composition comprising a (meth) acrylic polymer and a (meth) acrylic monomer, a cured product excellent in moldability and demolding property and in which shrinkage at the curing is sufficiently reduced, can be provided, and found that such a cured product has excellent balance of dimensional stability and moldability. They have also found that if the (meth)acrylic monomer essentially comprises an ether structure, the cured product is excellent also in light resistance and transparency. Also, they have found that if a glass transition temperature and a cure shrinkage ratio each shown by a cured product obtained by curing such a resin composition, provided can be a resin composition which can provide a cured product capable of more sufficiently exhibiting not only high transparency but also moldability such as smoothness and anti-mold fouling property, demolding property, and light resistance. These findings have now led to solution of the above-mentioned problems. They have also found that a cured product obtained by curing such a resin composition is particularly useful in optical members, lighting members, and automobile members, for example. Thereby, the present invention has been completed.

That is, the present invention is a radiation-curable composition used after cured by radiation energy, wherein a cured product produced by curing the curable composition by radiation energy of $2 J/cm^2$ satisfies: an initial light transmittance of 80% or more at a wavelength of 380 nm; and a light transmittance retention of 90% or more after 200 hours of accelerated light resistance test. The radiation-curable composition of the present invention includes ionized radiation-curable composition.

BRIEF DESCRIPTION OF THE DRAWINGS

Fig. 1 is a view schematically showing a device for liquid crystal backlights used in accelerated light resistance test in Example 40.

EXPLANATION OF NUMERALS

1 Light source
2 Light source reflector
3 Reflecting plate
4 Light guide panel
5 Diffusion sheet
6 Prism sheet

DETAILED DESCRIPTION OF THE INVENTION

The present invention is described in more detail below.

The radiation-curable composition of the present invention (hereinafter, also referred to as "curable composition", and including "(meth)acrylic resin composition" as a preferable form) is a curable composition used after cured by radiation energy. The radiation energy is not especially limited, and may be, for example, electromagnetic wave, ultraviolet radiation, visible radiation, infrared radiation, electron ray, and gamma ray. Among them, ultraviolet radiation is preferred. In curing by ultraviolet irradiation, a light source including light with a wavelength range of 150 to 450 nm is preferred. Preferred examples of such a light source include solar ray, low-pressure mercury lamp, high-pressure mercuryvaporlamp, ultrahighpressuremercurylamp, metalhalide lamp, gallium lamp, xenon lamp, and carbon-arc lamp. In addition to such a light source, heat by infrared radiation, far infrared radiation, hot wind, high-frequency heating, and the like, can be used.

In curing by electron beam irradiation, electron ray with an acceleration voltage of 10 to 500 kV is preferably used. The acceleration voltage is more preferably 20 to 300 kV, and still more preferably 30 to 200 kV. The irradiation amount of the electron ray is preferably 2 to 500 kGy, and more preferably 3 to 300 kGy, and still more preferably, 5 to 200 kGy. In addition to the electron ray, heat by infrared radiation, far infrared radiation, hot wind, high-frequency heating, and the like, can be used.

In the present invention, it is preferable that a cured product produced by curing the curable composition by radiation energy of 2J/cm$^2$ satisfies an initial light transmittance of 80% or more at a wavelength of 380 nm. If the above-mentioned initial light transmittance is less than 80%, such a curedproduct is not preferably used in a field that needs high transparency, for example, in optical members such as LED (light-emitting diode) encapsulant, optical cable, optical waveguide, and lens sheet. Therefore, the functional effect of the present invention of making the product to be useful in much more applications can be insufficiently exhibited. The initial light transmittance is preferably 82% or more, and more preferably 85% or more.

The above-mentioned initial light transmittance at a wavelength of 380 nm can be measured by the following procedures.

"Initial light transmittance at a wavelength of 380 nm"

1. Preparation of cured product (specimen)

A frame in 400 μm thickness is provided on a glass surface, and thereinto a curable composition is charged. Thereon, a 250 μm PET (polyethylene terephthalate) film is put, and the composition is irradiated with ultraviolet radiation having an irradiation intensity of 43 mJ/cm$^2$·second and a dominant wavelength of 365 nm, using 250W extra high pressure mercury lamp under an atmosphere of 25°C for 46.5 seconds. Thereby, the composition is cured enough, and then removed from the mold to prepare a specimen.

2. Measurement of initial light transmittance

The above-mentioned specimen is measured for light transmittance (%) at 380 nm using spectrophotometer

UV-3100 (product of Shimadzu Corp.).

In the present invention, it is preferable that the cured product produced by curing the curable composition by radiation energy of 2J/cm$^2$ satisfies a light transmittance retention of 90% or more after 200 hours of accelerated light resistance test. Thereby, the curable composition can provide a cured product excellent in performance of hardly causing coloring, deterioration, and degradation to light from a light source with a wavelength distribution from a short wavelength region of visible light to an ultraviolet region, that is, light resistance, and thereby can more sufficiently exhibit the functional effects of the present invention. If the light transmittance retention is less than 90%, such a cured product is not preferably used in a field that needs high light resistance, for example, in optical members such as LED encapsulant, optical cable, optical waveguide, and lens sheet. Therefore, such a cured product may insufficiently exhibit the functional effect of the present invention of making the product to be useful in much more applications. The light transmittance retention is 95% or more. More preferably, the light transmittance retention is 90% or more after 300 hours of accelerated light resistance test.

The above-mentioned light transmittance retention after 200 hours (or 300 hours) of accelerated light resistance test can be measured by the following procedures, for example.

"Light transmittance retention after 200 hours of accelerated light resistance test"

1. Preparation of cured product (specimen)

A specimen is prepared in the same manner as in the above-mentioned preparation of the cured product (specimen) in the measurement of the initial light transmittance at a wavelength of 380 nm.

2. Measurement of light transmittance retention

The above-mentioned specimen is first measured for light transmittance (%) at 380 nm using spectrophotometer UV-3100 (product of Shimadzu Corp.). This value is defined as "light transmittance (%) before accelerated light resistance test." Then, this specimen is irradiated at an irradiation intensity of 90 mW/cm$^2$, a wavelength of 295 to 450nm, a humidity of 70%Rh, and a temperature of 50°C, using a superenergy irradiation testing machine (product of Suga Test Instruments Co., Ltd.). The specimen after the irradiation for 200 hours (or 300 hours) is measured for light transmittance (%) at 380 nm again using spectrophotometer UV-3100 (product of Shimadzu Corp.). This value is defined as "light transmittance after accelerated light transmittance test." Then, a light transmittance retention (%) is calculated from the following formula. Light transmittance retention (%) = (Light transmittance after accelerated light resistance test/ Light transmittance before accelerated light resistance test) x 100

In the present invention, it is preferable that the cured product produced by curing the curable composition by radiation energy of 2J/cm$^2$ shows a pencil hardness of B or more. As mentioned above, if the above-mentioned curable composition is a curable composition capable of providing a cured product with a high curability, the functional effects of the present invention can be more sufficiently exhibited. More preferably, the cured product shows a pencil hardness of HB or more.

The above-mentioned pencil hardness can be measured by the following procedures, for example.

"Pencil hardness"

1. Preparation of cured product (specimen)

A specimen is prepared in the same manner as in the above-mentioned preparation of the cured product (specimen) in the measurement of the initial light transmittance at a wavelength of 380 nm.

2. Measurement of pencil hardness

The above-mentioned specimen is measured for pencil hardness according to JIS K5600-5-4:1999.

It is preferable that the radiation-curable composition of the present invention comprises a (meth) acrylic esterified product of a compound having two or more hydrogen groups in one molecule (hereinafter, also referred to as "(meth)acrylic esterified product (A)"). Such a (meth)acrylic esterified product (A) means an esterified compound that can be generated from a compound having two or more hydroxyl groups in one molecule (hereinafter, also referred to as "polyol compound") and (meth)acrylic acid (methacylic acid and/or acrylic acid).

The content of the above-mentioned (meth)acrylic esterifiedproduct (A) is preferably 10 to 95% by weight, relative to 100% by weight of a total amount of the above-mentioned radiation-curable composition. If the content is set to within this range, a cured product obtained by curing the curable composition has more excellent balance of heat

resistance, dimensional stability, and moldability. The content is more preferably 20 to 90% by weight, and still more preferably 30 to 85% by weight.

The above-mentioned polyol compound preferably has no aromatic hydrocarbon structure. Thereby, a cured product obtained by curing the above-mentioned curable composition can have more sufficiently improved light resistance.

Examples of such a polyol compound, that is, the compound having no aromatic hydrocarbon structure and having two or more hydroxyl groups in one molecule include alkanediols such as ethylene glycol, propylene glycol, 1,2-butanediol, 1,3-butanediol, 1,4-butanediol, 1,5-pentanediol, 1,6-hexanediol, 1,7-heptanediol, 1,8-octanediol, 1,9-nonanediol, 1,10-decandiol, 1,11-undecanediol, 1,12-dodecanediol, 1,13-tridecanediol, 1,14-tetradecanediol, 1,15-pentadecanediol, 1,16-hexadecanediol, 3-methyl-1,5-pentanediol, 2,4-diethy-1,5-pentanediol, 1,2-cyclohexanediol, 1,3-cyclohexanediol, 1,4-cyclohexanediol, tricyclodecanedimethanol, cyclohexanedimethanol, hydrogenated bisphenol A, neopentyl glycol, and butyl ethyl propanediol;

an esterified product of neopentyl glycol with hydroxy pivalic acid;

β,β,β',β'-tetramethyl-2,4,8,10-tetraoxaspiro[5,5]unde cane-3,9-dienol;

trimethylolethane, trimethylolpropane, trimethylolbutane, trimethylolhexane, ditrimethylolpropane, pentaerythritol, dipentaerythritol, glycerin, and polyglycerin.

One or two or more species of them may be used.

It is preferable that the compound having no aromatic hydrocarbon structure and having two or more hydroxyl groups in one molecule is a compound not containing β-hydrogen to the hydroxyl groups (that is, the hydrogen groups of the compound itself). Thereby, the cured product obtained by curing the above-mentioned curable composition can have more sufficiently improved resistance to degradation or discoloration caused by light. Examples of such a polyol compound include neopentyl glycol, butyl ethyl propanediol, and an esterified product of neopentyl glycol with hydroxy pivalic acid, β,β,β',β'-tetramethyl-2,4,8,10-tetraoxaspiro[5,5]undecane-3 ,9-dienol, trimethylolethane, trimethylolpropane, trimethylolbutane, trimethylolhexane, ditrimethylolpropane, pentaerythritol, and dipentaerythritol. Among them, neopentyl glycol and trimethylolpropane are preferable.

The alcohol not containing β-hydrogen to the hydroxyl groups (that is, the hydrogen groups of the alcohol itself) means an alcohol compound (an alcohol), in which all atoms to which carbon atoms in β-position to its own hydroxyl groups are bonded are carbon atoms other than hydrogen atom. In these alcohol compounds, all of the atoms to which the carbon atom in β-position is bonded are carbon atoms. These alcohol compounds have the common chemical structure in that no aromatic hydrocarbon structure is contained and two or more hydroxyl groups are contained in one molecule. Therefore, the same performances and effects are exhibited in the present invention. The skelton having β-hydrogen is easily deteriorated by light, and elimination of the β-hydrogen may cause discoloration of an object. Accordingly, the cured product produced by curing the above-mentioned curable composition can be excellent.

The above-mentioned (meth) acrylic esterified product (A) may be a commercialized product or may be prepared for oneself to be used. As a method for the preparation for oneself, mentioned may be a method (transesterification method) of producing the (meth) acrylic esterified product (A) by subjecting the above-mentioned polyol compound and a (meth) acrylic ester to dealcoholization reaction in the presence of a catalyst; and a method (dehydration-condensation method) of producing the (meth)acrylic esterified product (A) by subjecting the above-mentioned polyol compound and (meth) acrylic acid to dehydration reaction in the presence of a catalyst.

The (meth)acrylic ester that can be used in the above-mentioned transesterification method is not especially limited, and is preferably methyl (meth)acrylate, ethyl (meth)acrylate, propyl (meth)acrylate, or butyl (meth)acrylate.

In the above-mentioned transesterification method, the molar ratio of the charged polyol compound to the charged (meth)acrylic ester (hydroxyl group in the polyol compound: (meth) acrylic ester) is preferably, 1:1 to 1:20, for example. The molar ratio is more preferably 1:1.5 to 1:10, and still more preferably 1:2 to 1:5.

The catalyst that can be used in the above-mentioned transesterification method is not especially limited, and may be alkali metal alcoholate, magnesium alcoholate, aluminum alcoholate, titanium alcoholate, dibutyltin oxide, or anion-exchange resin. The use amount of the catalyst is preferably 0.01 to 10% by weight, relative to 100% by weight of a total charged amount in the reaction. The use amount is more preferably 0.05 to 5% by weight, and still more preferably 0.1 to 3% by weight. The catalyst is preferably removed by a general method after the reaction.

A solvent that can be used in the above-mentioned transesterification method is not especially limited, and may be pentane, cyclopentane, hexane, cyclohexane, methylcyclohexane, heptane, cycloheptane, octane, isooctane, benzene, toluene, or cymene. The use amount of the solvent is preferably 1 to 70% by weight, relative to 100% by weight of a total charged amount in the reaction. The use amount is more preferably 5 to 50% by weight, and still more preferably 10 to 30% by weight.

The reaction temperature in the above-mentioned transesterification method is preferably 50 to 150°C, for example. The reaction temperature is more preferably 70 to 140°C, and still more preferably 90 to 130°C.

In the above-mentioned dehydration-condensation method, the molar ratio of the charged polyol compound to the charged (meth)acrylic acid (hydroxyl group in the polyol compound: (meth) acrylic acid) is preferably, 1:1 to 1: 5, for

example. The molar ratio is more preferably 1:1.01 to 1:2, and still more preferably 1:1.05 to 1:1.5.

The catalyst which can be used in the above-mentioned dehydration-condensation is not especially limited, and may be an acid catalyst, such as sulfuric acid, hydrochloric acid, phosphoric acid, p-toluenesulfonic acid, benzenesulfonic acid, methansulfonic acid, trifluoro methansulfonic acid, cation exchange resin. The use amount of the catalyst is preferably 0.01 to 10% by weight, relative to 100% by weight of a total charged amount in the reaction. The use amount is more preferably 0.05 to 5% by weight, and still more preferably 0.1 to 3% by weight. The catalyst is preferably removed by a general method after the reaction.

Among the above-mentioned catalysts, a cation exchange resin is preferable in terms of reducing the content of a sulfonic derivative (sulfur contents) in the obtained curable composition. Examples of the cation exchange resin include AMBERLYST (registered trademark) and AMBERLITE (registered trademark) produced by Rohm and Haas Company and DIAION (registered trademark) produced by Mitsubishi Chemical Corp.. If such a cation exchange resin is used as the catalyst, the cation exchange resin is sufficiently washed with water or an organic solvent such as toluene and methanol, before used, for preventing elution of a sulfonic derivative (sulfur contents).

The use amount and the kind of a solvent that can be used in the above-mentioned dehydration-condensation method are not especially limited and may be the above-mentioned embodiments in the transesterification method as a preferable embodiment. The reaction temperature in the above-mentioned dehydration-condensation is not especially limited and preferably determined as mentioned above in the transesterification method.

A polymerization inhibitor is preferably added in the reaction for preventing polymerization of the (meth)acrylic ester during the transesterification reaction or the dehydration-condensation reaction, in the above-mentioned transesterification method and the above-mentioned dehydration-condensation. Examples of the polymerization inhibitor include 4-hydroxy-2,2,6,6-tetramethylpiperidine-N-oxyl(4 H-TEMPO) and a derivative thereof (TEMPO derivative); phenols such as hydroquinone and hydroquinone monomethyl ether; quinones such as benzoquinone and diphenyl benzoquinone; phenothiazine; and copper salt. One or two or more species of them may be used. The use amount of the polymerization inhibitor is preferably 0.0001 to 2% by weight, relative to 100% by weight of a total charged amount in the reaction. The use amount is more preferably 0.005 to 0.5% by weight.

It is preferable that the above-mentioned (meth) acrylic esterified product (A) has an ether structure represented by the following formula (1):

[Formula 1]

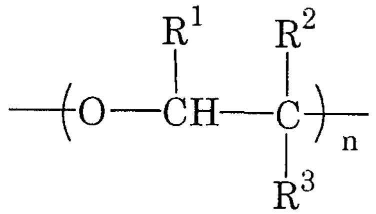

(1)

in the formula $R^1$, $R^2$, and $R^3$ being the same or different, and each representing at least one group selected from the group consisting of a hydrogen atom, a methyl group, and an ethyl group; a total number of carbon atoms of $R^1$, $R^2$, and $R^3$ being 0 to 2; n representing an integer of 1 to 100. If such an ether structure is present in the above-mentioned (meth)acrylic esterified product (A), the curing can proceed efficiently even in use of an extremely small amount of a photopolymerization initiator. Therefore, a cured product, which can more sufficiently satisfy all of the light resistance, the transmittance, and the curability, can be produced. That is, the addition amount of the photopolymerization initiator can be significantly reduced because the esterified product has the ether structure represented by the above-mentioned formula (1), although the light resistance or the transmittance in a short wavelength region of visible light may be insufficient due to the addition of the photopolymerization initiator, as mentioned above. Therefore, yellowing components and components absorbing light at a short wavelength can be sufficiently reduced. Thereby, the functional effects of the present invention can be sufficiently exhibited.

As mentioned above, the polyol compound constituting the above-mentioned (meth)acrylic esterified product (A) preferably has no aromatic hydrocarbon structure. As mentioned above, preferable embodiments of the present invention include an embodiment in which the curable composition comprises a (meth) acrylic esterifiedproduct of a compound having no aromatic hydrocarbon structure and having two or more hydroxyl groups in one molecule, and the (meth) acrylic esterified product has an ether structure represented by the above formula (1).

The above-mentioned ether structure is a structure having an alkylene oxide unit as a repeating unit. The alkylene oxide unit may have a side chain satisfying the above-mentioned condition in some cases. For generating such an ether structure, it is preferable that at least one alkylene oxide selected from the group consisting of ethylene oxides,

propylene oxides, and butylene oxides (1,2-butylene oxide, 2,3-butylene oxide, isobutylene oxide) is used as a precursor for adding the alkylene oxide unit.

In the above-mentioned ether structure, the repeating number of the alkylene oxide unit (n in the above-mentioned formula (1)) is an integer of 1 to 100. If the n is too small, insufficient light resistance may be obtained. In contrast, if the n is too large, the water resistance and the hardness may be insufficient. The repeating number is preferably 1 to 15, and more preferably 1 to 10, and still more preferably 1 to 8. In some cases, a (meth)acrylic esterified product (A) to which an alkylene oxide unit with a repeating number out of the above-mentioned preferred range is added may be used.

The (meth)acrylic esterified product (A) having the above-mentioned ether structure may be a commercialized product or may be prepared for oneself to be used. As a method for the preparation for oneself, the (meth) acrylic esterified product having the above-mentioned ether structure is preferably prepared as follows, for example: the alkylene oxide unit is added to the hydroxyl groups of the polyol compound by a general method; and then this compound and (meth)acrylic acid(or (meth)acrylic ester) is esterified by the above-mentioned transesterification method or the dehydration-condensation method. If a polyol compound to which an alkylene oxide unit is added is commercially available, such a commercial product is used and only the esterification reaction may be performed for oneself.

A particularly preferable embodiment of the (meth) acrylic esterified product (A) having the above-mentioned ether structure is an embodiment in which the (meth) acrylic esterified product (A) is a (meth) acrylic esterified product of a compound prepared by adding an alkylene oxide to the compound having no aromatic hydrocarbon structure and having two or more hydroxyl groups in one molecule, and the alkylene oxide is at least one selected from the group consisting of ethylene oxides, propylene oxides, and buthylene oxides.

One of the more preferable embodiment of the present invention is that the (meth) acrylic esterified product of the present invention is a (meth)acrylic esterified product of a compound prepared by adding an alkylene oxide to the compound having no aromatic hydrocarbon structure, having two or more hydroxyl groups in one molecule, and not containing β-hydrogen to the hydroxyl groups

The content of the above-mentioned ether structure is preferably 5% by weight or more, relative to 100% by weight of a total amount of the above-mentioned radiation-curable composition. If the content is less than 5% by weight, the above-mentioned effects attributed to the presence of the above-mentioned ether structure may be insufficiently exhibited. It is preferable that the content of the above-mentioned ether structure is larger in terms of further improving performance hardly causing discoloration, deterioration, and degradation to light from a light source with a wavelength distribution from a short wavelength region of visible light to an ultraviolet region (that is, light resistance) in the cured product obtained by curing the curable composition. Specifically, the content of the ether structure is preferably more than 5% by weight, and more preferably 10% by weight, and still more preferably 20% by weight or more. The upper limit of the content of the above-mentioned ether structure is not especially limited. The upper limit is preferably 65% by weight or less, relative to 100% by weight of a total amount of the above-mentioned radiation-curable composition in terms of improving the water resistance of the cured product. The upper limit is more preferably 60% by weight or less, and still more preferably 55% by weight or less.

The content of the above-mentioned ether structure can be determined by the following procedures, for example.

"Content of ether structure"

The curable composition (15 mg) and 48% by weight hydrobromic acid (200 mg) are charged into a 5mL-aluminum seal vial. Then, the vial is sealed with a Teflon/silicon septum and heated at 150°C in an oven for 2 hours, thereby making bromic acid decomposition reaction to proceed. Thereby, the ether structure in the curable composition is brominated. After completion of the reaction, the reaction liquid is measured for bromid content (for example, 1,2-dibromopropane, 1,2-dibromobutane, and 1,4-dibromobutane) by gas chromatography, and the bromid content is quantitated by comparison with a calibration curve. The content of the above-mentioned ether structure in the curable composition is calculated from the quantitated value of the bromid content.

In order to set the content of the above-mentioned ether structure to within the above-mentioned range, preferably adopted may be a method for adjusting the use amount of the precursor (for example, alkylene oxide) of the ether structure when the (meth)acrylic esterified product (A) having the above-mentioned ether structure is produced.

It is preferable that the above-mentioned radiation-curable composition contains 100 ppm or less of a sulfonic acid, a sulfonic acid salt, and/or a sulfonic ester (hereinafter, also referred to as simply "sulfonic acid derivative") on sulfur content equivalent basis, relative to a total amount of the curable composition. That is, it is preferable that the curable composition contains 100 ppm or less, on sulfur content equivalent basis, of a sulfonic acid (salt) and/or a sulfonic ester. Thereby, coloring, deterioration, and degradation of the cured product, caused by the sulfonic acid derivative, can be sufficiently prevented. The content is more preferably 50 ppm or less, and still more preferably 30 ppm or less, and still more preferably 20 ppm or less, and particularly preferably 10 ppm or less.

The "sulfonic acid (salt)" means a sulfonic acid and/or a sulfonic acid salt.

The above-mentioned content of the sulfonic acid derivative can be determined by the following procedures.

"Content of sulfonic acid derivative"

The radiation-curable composition is dissolved in toluene, and thereto is added water. Then, a sulfonic acid and a sulfonic acid salt are extracted in a water layer using a separating funnel. This water layer is separated and condensed using an evaporator, and further therefrom, moisture is removed with a hot air dryer. Then, the resultant substance is dissolved in acetone and measured for content of sulfonic acid by gas chromatography, and then quantitated by comparison with a calibration curve.

In order to set the sulfonic acid derivative content in the above-mentioned curable composition to within the above-mentioned range, preferably adopted is (1) a method in which no sulfonic acid derivative is used in the production step of the curable composition, or (2) a method in which, if a sulfonic acid derivative is used in the production method of the curable composition, a step of removing the sulfonic acid derivative is additionally performed.

In the above-mentioned method (1), it is preferable that the above-mentioned (meth)acrylic esterified product (A) is produced by for example, dehydration-condensation method using, as a catalyst, a compound (for example, cation exchange resin) other than a sulfonic acid derivative (especially p-toluenesulfonic acid) usually used, or by transesterification method using metal alcoholate and the like as a catalyst. Such methods are preferable in view of production costs because the sulfonic acid derivative content is theoretically zero, and the removal step is not additionally performed.

As measures to remove the sulfonic acid derivative in the above-mentioned method (2), adopted can be a cleaning method using water or an alkaline aqueous solution, or an adsorption filtration method in which a basic inorganic salt (for example, MgO) or an anion exchange resin is used.

A particularly preferable embodiment of the above-mentioned radiation-curable composition is an embodiment in which the curable composition contains 100 ppm or less, on sulfur content equivalent basis, of a sulfonic acid (salt) and/or a sulfonic ester; the curable composition comprises a (meth) acrylic esterifiedproduct of a compound having no aromatic hydrocarbon structure and having two or more hydroxyl groups in one molecule; the (meth)acrylic esterified product has an ether structure represented by the above formula (1); and the ether structure is 5% by weight or more relative to 100% by weight of the curable composition. In such an embodiment, coloring, deterioration, or degradation caused by light from a light source with a wavelength distribution from a short wavelength region of visible light to an ultraviolet region, can be dramatically suppressed in the cured product obtained by curing the above-mentioned curable composition. Therefore, the functional effects of the present invention can be sufficiently exhibited.

It is preferable that the radiation-curable composition of the present invention comprises a (meth) acrylic ester polymer and/or a (meth)acrylic ester copolymer. Thereby, forming defects caused by shrinkage at the curing, dimensional stability, or the like, can be sufficiently improved, with retaining light resistance.

Such a polymer and/or a copolymer is preferably obtained by polymerizing a monomer component containing 50% by mole or more of (meth) acrylic ester and/or (meth) acrylic acid, relative to 100% by mole of the whole of the monomer component. A specific embodiment thereof is not especially limited. The radiation-curable composition may comprise one or two or more species of such a polymer and/or a copolymer.

One or two or more species of the following compounds and the like may be used as the above-mentioned monomer component constituting the (meth) acrylic ester polymer and/or the (meth)acrylic ester copolymer.

Monofunctional (meth)acrylates such as methyl (meth)acrylate, ethyl (meth)acrylate, propyl (meth)acrylate, butyl (meth)acrylate, 2-ethyl hexyl (meth)acrylate, n-nonyl (meth)acrylate, lauryl (meth)acrylate, cyclohexyl (meth)acrylate, cyclohexylmethyl (meth)acrylate, (meth)acrylic acid, adamantyl (meth)acrylate, norbonyl (meth)acrylate, N,N-dimethylaminoethyl (meth)acrylate, and α-hydroxymethyl butylacrylate;
monofunctional (meth)acrylamides such as N,N-dimethyl (meth)acrylamide and N-methylol (meth)acrylamide;
monofunctional vinyl ethers such as methyl vinyl ether, ethyl vinyl ether, propyl vinyl ether, butyl vinyl ether, 2-ethyl hexyl vinyl ether, n-nonyl vinyl ether, lauryl vinyl ether, cyclohexyl vinyl ether, and chlorethyl vinyl ether;
monofunctional N-vinyl compounds such as N-vinylpyrrolidone, N-vinylcaprolactam, N-vinyl-N-methylformamide, N-vinylimidazole, N-vinylformamide, and N-vinylacetamide;
monofunctional vinyl compounds such as styrene, α-methylstyrene, vinyltoluene, allyl acetate, vinyl acetate, vinyl propionate, and vinyl benzoate;
monofunctional α,β-unsaturated compounds such as maleic anhydride, maleic acid, dimethyl maleate, diethyl maleate, monomethyl maleate, monoethyl maleate, fumaric acid, dimethyl fumarate, diethyl fumarate, monomethyl fumarate, monoethyl fumarate,itaconic anhydride,itaconic acid, dimethyl itaconate, diethyl itaconate, monomethyl itaconate, monoethyl itaconate, methylene malonate, methylene dimethyl malonate, methylene monoethyl malonate, cinnamic acid, methyl cinnamate, ethyl cinnamate, crotonic acid, methyl crotonate, and ethyl crotonate.

The above-mentioned (meth)acrylic ester polymer and/or the (meth) acrylic ester copolymer preferably contain/contains a functional group polymerizable with the above-mentioned (meth)acrylic esterified product (A). Thereby, the cured product obtained by curing the above-mentioned curable composition can have more sufficiently improved optical

properties such as toughness and water resistance.

A production method of such a (meth) acrylic ester polymer and/or a (meth) acrylic ester copolymer having a functional group is not especially limited. The following methods (1) to (5) may be mentioned, for example. Methods other than these methods also may be used.

(1) A method in which a copolymer of a polymerizable monomer containing a carboxyl group with a (meth)acrylic ester and a polymerizable monomer containing a glycidyl group are reacted, or a method in which a copolymer of a polymerizable monomer containing a glycidyl group with a (meth)acrylic ester and a polymerizable monomer containing a carboxyl group are reacted;
(2) a method in which a copolymer of a polymerizable monomer containing a hydroxyl group with a (meth)acrylic ester and a polymerizable monomer containing an isocyanate group are reacted, or a method in which a copolymer of a polymerizable monomer containing an isocyanate group with a (meth)acrylic ester and a polymerizable monomer containing a hydroxyl group are reacted;
(3) a method in which a copolymer of a polymerizable monomer containing a hydroxyl group and/or a carboxyl group with a (meth)acrylic ester and a polymerizable monomer containing a vinylether group and another polymerizable group are reacted, or a method in which a copolymer of a polymerizable monomer containing a vinylether group and another polymerizable group with a (meth) acrylic ester and a polymerizable monomer containing a hydroxyl group and/or a carboxyl group are reacted;
(4) a method in which a copolymer of a polymerizable monomer containing a hydroxyl group with a (meth)acrylic ester and a polymerizable monomer containing an acid anhydride group are reacted, or a method in which a copolymer of a polymerizable monomer containing an acid anhydride group with a (meth) acrylic ester and a polymerizable monomer containing a hydroxyl group are reacted; and
(5) a monomer component containing a multifunctional monomer is partially polymerized and part of the double bonding part is made to remain at the side chain of the polymer.

The content ratio of the above-mentioned (meth)acrylic ester polymer and/or the (meth)acrylic ester copolymer is preferably 5 to 50% by weight, relative to 100% by weight of a total amount of the above-mentioned radiation-curable composition. Thereby, particularly shrinkage at the curing is more sufficiently suppressed, and more excellent moldability can be obtained. The content ratio is more preferably 10 to 40% by weight, and still more preferably 10 to 30% by weight.

The above-mentioned radiation-curable composition may contain another polymerizable monomer other than the above-mentioned (meth) acrylic ester. In this case, functional effects such as reduction in viscosity or improvement in curing rate of the curable composition can be obtained.

Such a polymerizable monomer is not especially limited. Used can be one or two or more species of the compounds mentioned above as the monomer component for producing the above-mentioned (meth)acrylic ester polymer and/or the (meth)acrylic ester copolymer. As multifunctional monomers, used may be one or two or more species of multifunctional vinyl ethers such as hexanediol divinyl ether, trimethylolpropane trivinylether, ditrimethylolpropane tetravinyl ether, glycerin trivinyl ether, pentaerythritoltetravinylether, dipentaerythritolpentavinyl ether, and dipentaerythritol hexavinyl ether; and multifunctional vinyl compounds such as divinyl benzene.

The content of the above-mentioned polymerizable monomer is not especially limited and preferably 0.1 to 50% by weight, relative to 100% by weight of a total amount of the above-mentioned radiation-curable composition. If the content is set to within this range, functional effects such as reduction in viscosity or improvement in curing rate of the curable composition can be obtained.

The above-mentioned radiation-curable composition may contain a polymerizable oligomer. In this case, functional effects of improvement in toughness of the cured product obtained by curing the curable composition can be obtained.

As such a polymerizable oligomer, used may be one or two or more species of the following compounds, for example.

Polyester (meth)acrylates obtained by reaction of a saturated or unsaturated polybasic acid or an acid anhydride thereof (for example, maleic acid, succinic acid, adipic acid, phthalic acid, isophthalic acid, terephthalic acid, and tetrahydrophthalic acid), and a saturated or unsaturated polyhydric alcohol (for example, ethylene glycol, propylene glycol, neopentyl glycol, 1,4-butanediol, 1,6-hexanediol, 3-methyl-1,5-pentanediol, polyethylene glycol, polypropylene glycol, 1,4-dimethylol benzene, trimethylol propane, and pentaerythritol), and (meth)acrylic acid;
epoxy (meth)acrylates obtained by reaction of a multifunctional epoxy compound (for example, bisphenol A diglycidyl ether, hydrogenated bisphenol A diglycidyl ether, 3,4-epoxy cyclohexenyl-3',4'-epoxy cyclohexene carboxylate, hexahydrophthalic diglycidyl ester, and triglycidyl isocyanurate) and (meth)acrylic acid;
oxetane (meth)acrylates obtained by reaction of a multifunctional oxetane compound (for example, 4,4)-bis[(3-ethynyl-3-oxcetanyl)methoxymethyl]biphenyl, bis[(3-ethynyl-3-oxetanyl)methyl]ester of 1,4-benzenedicarboxylate, 9,9-bis[2-methyl-4-{2-(3-oxetanyl)}butoxyphenyl]fluorene, and 9,9-bis[4[2-{2-(3-oxetanyl)}butoxy]ethoxy phenyl]fluorene) and

(meth)acrylic acid.;
polyurethane (meth)acrylates obtained by reaction of a saturated or unsaturated polyhydric alcohol (for example, ethylene glycol, neopentyl glycol, polytetramethylene glycol, polyester polyol, and polycaprolactone polyol), and an organic polyisocyanate (for example, tolylenediisocyanate, isophorone diisocyanate, and xylylene diisocyanate) and a hydroxyl group-containing (meth)acrylate (for example, 2-hydroxyethyl (meth)acrylate, 2-hydroxypropyl (meth)acrylate, and 1,4-butanediol mono(meth)acrylate);
polysiloxane poly (meth) acrylates obtained by reaction of a polysiloxane and (meth)acrylic acid; and
polyamide poly (meth) acrylates obtained by reaction of a polyamide and (meth)acrylic acid.

If such a polymerizable oligomer is contained in the resin composition, functional effects of improvement in toughness of the cured product obtained by curing the resin composition can be obtained.

The content of the above-mentioned polymerizable oligomer is not especially limited, and preferably 0.1 to 50% by weight, relative to 100% by weight of a total amount of the above-mentioned radiation-curable composition, for example. If the content is set to within this range, functional effects of improvement in toughness of the cured product obtained by curing the curable composition can be sufficiently obtained.

The above-mentioned radiation-curable composition may further contain another polymer other than the above-mentioned (meth)acrylic ester polymer and/or the (meth)acrylic ester copolymer.

Examples of such a polymer include polycarbonate, polystyrene, silicon resin, polyimide, polyamide, saturated polyester, polyvinyl acetate, polyvinyl chloride, polyvinyl alcohol, polyvinyl acetal, AS resin and EVA resin. One or two ormore species of themmaybe used. If such a polymer is contained in the curable composition, functional effects of improvement in optical properties or mechanical properties of the cured product obtained by curing the resin composition can be obtained.

The content of the above-mentioned another polymer is not especially limited and preferably 0.1 to 50% by weight, relative to 100% by weight of a total amount of the above-mentioned radiation-curable composition. If the content thereof is set to within this range, functional effects of improvement in optical properties or mechanical properties of the cured product obtained by curing the resin composition can be sufficiently obtained.

In the above-mentioned radiation-curable composition, the cured product produced by curing the curable composition satisfies an initial light transmittance of 80% or more at a wavelength of 380 nm, and a light transmittance retention of 90% or more after 200 hours of accelerated light resistance test. It is preferable that the cured product produced by curing the curable composition satisfies a surface tension of 34 mN/m or less.

If the above-mentioned surface tension is more than 34 mN/m, the curable composition can not provide a cured product excellent in stain resistance or demolding property. Therefore, the functional effect of making the curable composition to be useful inmuchmore applicationsmaybe insufficientlyexhibited.

As mentioned above, the preferable embodiments of the present invention includes an embodiment in which the cured product produced by curing the curable composition satisfies a surface tension of 34 mN/m or less. The surface tension is preferably 32 mN/mor less. The above-mentioned surface tension can be measure by the following method, for example.

"Surface tension"

1. Preparation of cured product (specimen)

A specimen is prepared in the same manner as in the above-mentioned preparation of the cured product (specimen) in the measurement of the initial light transmittance at a wavelength of 380 nm.

2. Measurement of surface tension

The above-mentioned specimen is measured for surface tension (mN/m) according to JIS K6769 (1999) using a wetting tension test mixture.

It is preferable that the cured product produced by curing the curable composition satisfies a glass transition temperature of 10 to 90°C and a cure shrinkage ratio of 12% or less. If this glass transition temperature is less than 10°C, the resin composition may not provide a cured product excellent in water resistance or resiliency. If this glass transition temperature is more than 90°C, the resin composition may not provide a cured product excellent in moldability and demolding property, and reduction in light resistance over time may be insufficiently prevented. The glass transition temperature is preferably 15 to 80°C and more preferably 20 to 70°C.

The "glass transition" means phenomenon in which when a vitreous substance such as an amorphous polymer compound is heated, temperature dependence of physical properties, such as heat capacity and coefficient of thermal expansion, is rapidly changed. And a temperature at which the "glass transition" occurs is referred to as "glass transition temperature". Such a glass transition temperature (°C) can be measured by the following procedures (dynamic viscoelasticity measuring method), for example.

"Glass transition temperature"

1. Preparation of cured product (specimen)

The resin composition is injected into a glass mold prepared by sandwiching a silicone rubber spacer in 200 μm thickness with two glass plates. Then, the composition is irradiated with ultraviolet radiation (dominant wavelength: 365nm, irradiation intensity: 35 $mJ/cm^2 \cdot$second) for 60 seconds using a 250W extra high pressure mercury lamp, and thereby the composition is cured. The mold is self-cooled to a room temperature and therefrom the composition is removed. Thereby, a sheet composition is obtained. Then, this sheet shaped body in 200 μm thickness is cut into a rectangle with a width of 5 mm. Thereby, a specimen is prepared.

2. Measurement of glass transition temperature

The above-mentioned specimen is subjected to dynamic viscoelasticity measurement using a viscoelasticity measuring apparatus (RSA-II, product of TA Instruments Japan) and thereby measured for glass transition temperature (°C). Specifically, measurement conditions are determined as follows: tension mode, frequency: 1Hz, distance between clamps: 25 mm, amplitude: 0.1%, and heating rate: 5°C/minute. And a temperature at which a value of loss tangent (tanδ) shows a peak when the temperature is heated from -40°C to 150°C is defined as a glass transition temperature (°C).

It is preferable that the above-mentioned cured product satisfies a cure shrinkage ratio of 12% or less. If the cure shrinkage ratio is more than 12%, the cured product excellent in not only moldability and demolding property, but also light resistance may not be obtained. Therefore, the functional effect of the present invention of making the curable composition to be useful in various applications may be insufficiently exhibited. The cure shrinkage ratio is preferably 11% or less, and more preferably 10% or less. The lower limit thereof is preferably 1% or more. If the lower limit is less than 1%, the demolding property may be reduced. The lower limit is more preferably 3% or more. The above-mentioned cure shrinkage ratio (%) can be measured by the following procedures.

"Cure shrinkage ratio"

1. Preparation of cured product (specimen)

The resin composition is injected into a glass mold prepared by sandwiching a silicone rubber spacer in 200 μm thickness with two glass plates. Then, the composition is irradiated with ultraviolet radiation (dominant wavelength: 365nm, irradiation intensity: 35 $mJ/cm^2 \cdot$second) for 60 seconds using a 250 W extra high pressure mercury lamp, and thereby the composition is cured. The mold is self-cooled to a room temperature and therefrom the composition is removed. Thereby, a sheet composition is obtained and used as a specimen.

2. Measurement of cure shrinkage ratio

The above-mentioned specimen is measured for density before curing (a) and density after curing (b) of the resin composition, using a hydrometer (Automatic Densimeter D-H-01, product of Toyo Seiki Seisaku-Sho, Ltd.), according to JIS K6901:1999. A coefficient of cubical shrinkage (%) is determined from the following formula, and this value is defined as a cure shrinkage ratio (%).

$$\text{Coefficient of cubical shrinkage (\%)} = \{(\text{density after curing (b)} - \text{density before curing (a)})/\text{density after curing (b)}\} \times 100$$

As mentioned above, it is one of the preferable embodiment of the present invention that the cured product produced by curing the curable composition satisfies a glass transition temperature of 10 to 90°C and a cure shrinkage ratio of 12% or less.

It is preferable that the radiation-curable composition of the present invention comprises a polyether-modif ied silicone oil, for example. Thereby, the composition can provide a cured product more excellent in stainresistance and demolding property, with retaining high transparency. Therefore, such a cured product can be more preferably used in various applications, particularly in optical materials.

Examples of the above-mentioned polyether-modified silicone oil include polyether-modified polydimethylsiloxanes such as BYK-302, BYK-307, BYK-330, and BYK-333 (each of them is tradename, product of BYK Chemie Japan KK.); KF-351, KF-352, KF-353, KF-354L, KF-355A, KF-615A, KF-945, KF-618, KF-6011, KF-6015, KF-6004 (each of them is tradename, product of Shin-Etsu Chemical Co., Ltd.); SH3746, SH3771, SH8400, SF8410 (each of them is tradename, product of Dow Corning Toray Co., Ltd.); TSF4440, TSF4445, TSF4446, TSF4452 (each of them is tradename, product of GE Toshiba Silicones Co., Ltd.). One or two or more species of them may be used. Among them, a polyether-modified polydimethylsiloxane is preferably used. The preferable embodiments of the present invention include an embodiment in which the above-mentioned curable composition comprises a polyether-modified polydimethylsiloxane.

The content of the above-mentioned polyether-modified silicone oil is preferably 0.001 to 10% by weight, relative to 100% by weight of a total amount of the above-mentioned radiation-curable composition, for example. If the content is less than 0.001% by weight, the composition may not provide a cured product more excellent in stain resistance and demolding property. If the content is more than 10% by weight, the cured product obtained by curing the above-mentioned radiation-curable composition may have insufficient transparency. The content is more preferably 0.01 to 5% by weight, and still more preferably 0.05 to 3% by weight.

It is preferred that the radiation-curable composition of the present invention contains a polymerization initiator. If the polymerization initiator is contained in the curable composition, polymerization (curing) is initiated depending on a predetermined polymerization initiation factor.

Commonly used polymerization initiators may be used as the above-mentioned polymerization initiator. For example, photopolymerization initiators and thermal polymerization initiators may be mentioned. Among them, it is preferable that at least a photopolymerization initiator is used. Thereby, production efficiency of optical components in which the curable composition of the present invention is used can be improved. If a photopolymerization initiator is added into a general curable composition, the light resistance or the transmittance in a short wavelength region of visible light maybe insufficient due to the addition of the photopolymerization initiator. However, use of the curable composition of the present invention makes it possible to reduce the addition of the photopolymerization initiator enough. Therefore, the cured product has more improved light resistance and transmittance in a short wavelength region of visible light, and therefore, can be more preferably used in various applications in addition to optical members, lighting members, and automobile members. The photopolymerization initiator and the thermal polymerization initiator may be used in combination, which is preferable because the addition amount of the photopolymerization initiator can be further reduced.

The above-mentioned photopolymerization initiator is not especially limited. One or two or more species of the following compounds may be used, for example.

Acetophenones such as diethoxyacetophenone, 2-hydroxy-2-methyl-1-phenylpropane-1-one, benzyl dimethyl ketal, 4-(2-hydroxyethoxy) phenyl-(2-hydroxy-2-propyl) ketone, 1-hydroxycyclohexyl phenyl ketone, 2-methyl-2-morpholino(4-thiomethylphenyl) propane-1-one, 2-benzyl-2-dimethylamino-1-(4-morpholinophenyl) butanone, and2-hydroxy-2-methyl-1-[4-(1-methylvinyl)phenyl] propanone oligomer;

benzoins such as benzoin, benzoin methyl ether, benzoin ethyl ether, benzoin isopropyl ether, and benzoin isobutyl ether;

benzophenones such as benzophenone, methyl ortho benzoylbenzoate, 4-phenylbenzophenone, 4-benzoyl-4'-methyl-diphenylsulfide, 3,3',4,4-tetra(t-butylperoxycarbonyl)benzophenone, 2,4,6-trimethylbenzophenone, 4-benzoyl-N,N-dimethyl-N-[2-(1-oxo-2-propenyloxy)ethyl]benz enemethanaminium bromide, and (4-benzoylbenzyl)trimethyl ammonium chloride;

thioxanthones such as 2-isopropylthioxanthone, 4-isopropylthioxanthone, 2,4-diethylthioxanthone, 2,4-dichlorothioxanthone, 1-chloro-4-propoxythioxanthone, and 2-(3-dimethylamino-2-hydroxy)-3,4-dimethyl-9H-thioxanthone-9-onmethchloride; and

acylphosphine oxides such as 2,4,6-trimethylbenzoyl-diphenylphosphine oxide, bis(2,6-dimethoxybenzoyl)-2,4,4-trimethyl-pentyl phosphine oxide, and bis(2,4,6-trimethylbenzoyl)-phenylphosphine oxide.

The above-mentioned thermal polymerization initiator is not especially limited. One or two or more species of the following organic peroxide initiators and azo initiators may be used, for example.

Organic peroxide initiators such as methyl ethyl ketone peroxide, cyclohexanone peroxide, methylcyclohexanone peroxide, methylacetoacetate peroxide, acetylacetate peroxide, 1,1-bis(t-hexylperoxy)-3,3,5-trimethylcyclohexane, 1,1-bis(t-hexylperoxy)-cyclohexane, 1,1-bis(t-butylperoxy)-3,3,5-trimethylcyclohexane, 1,1-bis(t-butylperoxy)-2-methylcyclohexane, 1,1-bis(t-butylperoxy)-cyclohexane, 1,1-bis(t-butylperoxy)cyclododecane, 1,1-bis(t-butylperoxy)butane, 2,2-bis(4,4-di-t-butylperoxycyclohexyl)propane, p-menthane hydroperoxide, diisopropylbenzene hydroperoxide, 1,1,3,3-tetramethylbutyl hydroperoxide, cumene hydroperoxide, t-hexyl hydroperoxide, t-butyl hydroperoxide, $\alpha,\alpha'$-bis (t-butylperoxy)diisopropylbenzene, dicumyl peroxide, 2,5-dimethyl-2,5-bis(t-butylperoxy)hexane, t-butylcumyl peroxide, di-t-butyl peroxide,

2,5-dimethyl-2,5-bis(t-butylperoxy)hexane, isobutyryl peroxide, 3,5,5-trimethyl hexanoyl peroxide, octanoyl peroxide, lauroyl peroxide, stearoyl peroxide, succinyl peroxide, m-toluoylbenzoyl peroxide, benzoyl peroxide, di-n-propyl peroxydicarbonate, diisopropyl peroxydicarbonate, bis(4-t-butylcyclohexyl)peroxydicarbonate, di-2-ethoxyethyl peroxydicarbonate, di-2-ethoxy hexyl peroxydicarbonate, di-3-methoxy butyl peroxydicarbonate, di-s-butyl peroxydicarbonate, di(3-methyl-3-methoxybutyl)peroxydicarbonate, α,α'-bis(neodecanoylperoxy)diisopropyl benzene, cumyl peroxyneodecanoate, 1,1,3,3-tetramethylbutyl peroxyneodecanoate, 1-cyclohexyl-1-methylethyl peroxyneodecanoate, t-hexyl peroxyneodecanoate, t-butyl peroxyneodecanoate, t-hexyl peroxypivalate, t-butyl peroxypivalate, 1,1,3,3-tetramethylbutyl peroxy-2-ethylhexanoate,
2,5-dimethyl-2,5-bis(2-ethylhexanoylperoxy)hexanoate, 1-cyclohexyl-1-methylethyl peroxy-2-ethylhexanoate, t-hexylperoxy-2-ethylhexanoate, t-butylperoxy-2-ethylhexanoate, t-hexylperoxyisopropyl monocarbonate, t-butyl peroxyisobutyrate, t-butyl peroxymaleate, t-butylperoxy-3,5,5-trimethylhexanoate, t-butyl peroxylaurate, t-butyl peroxyisopropyl monocarbonate, t-butylperoxy-2-ethylhexyl monocarbonate, t-butyl peroxyacetate, t-butylperoxy-m-tolylbenzoate, t-butylperoxy benzoate, bis(t-butylperoxy)isophthalate, 2,5-dimethyl-2,5-bis(m-tolylperoxy)hexane, t-hexylperoxy benzoate,2,5-dimethyl-2, 5-bis(benzoylperoxy)hexane, t-butyl peroxyallyl monocarbonate, t-butyl trimethylsilyl peroxide, 3,3',4,4'-tetra(t-butylperoxycarbonyl)benzophenone, and 2,3-dimethyl-2,3-diphenylbutane;
and azo compounds such as
2-phenylazo-4-methoxy-2,4-dimethylvaleronitrile,
1-[(1-cyano-1-methylethyl)azo]formamide,
1,1'-azobis(cyclohexane-1-carbonitrile),
2,2'-azobis(2-dimethylvaleronitrile),
2,2'-azobisisobutyronitrile,
2,2'-azobis(2,4-dimethylvaleronitrile),
2,2'-azobis(2-methylpropioneamidine)dihydrochloride,
2,2'-azobis(2-methyl-N-phenylpropioneamidine)dihydrochlorid e,
2,2'-azobis[N-(4-chlorophenyl)-2-methylpropioneamidine]dihy drochloride,
2,2'-azobis[N-(4-hydrophenyl)-2-methylpropioneamidine]dihyd rochloride,
2,2'-azobis[2-methyl-N-(phenylmethyl)propioneamidine]dihydr ochloride,
2,2'-azobis[2-methyl-N-(2-propenyl)propioneamidine]dihydroc hloride,
2,2'-azobis[N-(2-hydroxyethyl)-2-methylpropioneamidine]dihy drochloride,
2,2'-azobis[2-(5-methyl-2-imidazoline-2-yl)propane]dihydroc hloride,
2,2'-azobis[2-(2-imidazoline-2-yl)propane]dihydrochloride,
2,2'-azobis[2-(4,5,6,7-tetrahydro-1H-1,3-diazepine-2-yl)pro pane]dihydrochloride,
2,2'-azobis[2-(3,4,5,6-tetrahydropyrimidine-2-yl)propane]di hydrochloride,
2,2'-azobis[2-(5-hydroxy-3,4,5,6-tetrahydropyrimidine-2-yl) propane]dihydrochloride,
2,2'-azobis[2-[1-(2-hydroxyethyl)-2-imidazoline-2-yl]propan e]dihydrochloride,
2,2'-azobis[2-(2-imidazoline-2-yl)propane],
2,2'-azobis[2-methyl-N-[1,1-bis(hydroxy-methyl)-2-hydroxyeth yl]propioneamide],
2,2'-azobis[2-methyl-N-[1,1-bis(hydroxymethyl)ethyl]propion eamide],
2,2'-azobis[2-methyl-N-(2-hydroxyethyl)propioneamide],
2,2'-azobis(2-methylpropioneamide),
2,2'-azobis(2,4,4-trimethylpentane),
2,2'-azobis(2-methylpropane),
dimethyl-2,2-azobis(2-methylpropionate),
4,4'-azobis(4-cyano pentanoate), and
2,2'-azobis[2-(hydroxymethyl)propionitrile].

Among these polymerization initiators, polymerization initiators containing no aromatic hydrocarbon structure can be preferably used.

The radiation-curable composition may contain a thermal polymerization accelerator together with the above-mentioned thermal polymerization initiator. Examples of such a thermal polymerization accelerator include metal soaps such as cobalt, copper, tin, zinc, manganese, iron, zirconium, chromium, vanadium, calcium, and potassium; primary, secondary, tertiary amine compounds; quaternary ammonium salts; thiourea compounds; and ketone compounds. One or two or more species of them may be used. Among them, acetylacetone and methyl acetoacetate are preferred.

The mixed amount of the above-mentioned polymerization initiator (total amount of the photopolymerization initiator and thermal polymerization initiator) is preferably 0.001 to 10% by weight, relative to 100% by weight of a total amount of the above-mentioned radiation-curable composition, for example. As mentioned above, the preferable embodiments of the present invention includes an embodiment in which the above-mentioned radiation-curable composition contains 0.001 to 10% by weight of a polymerization initiator, relative to 100% by weight of the radiation-curable composition. If the content is less than 0.001% by weight, the polymerizability may be insufficient. If the content is more than 10% by weight, a cured product capable of exhibiting sufficient light resistance may not be obtained. The content is more preferably 0.001 to 5% by weight, and still more preferably 0.001 to 3% by weight. It is particularly preferable that the above-mentioned radiation-curable composition contains 0.001 to 0.5% by weight of a photopolymerization initiator, relative to 100% by weight of a total amount of the radiation-curable composition. Thereby, functional effects such as

improvement in light resistance or transmittance in a short wavelength region of visible light can be more sufficiently exhibited. As mentioned above, the preferable embodiments of the present invention include an embodiment in which the above-mentioned radiation-curable composition contains 0.001 to 1% by weight of a photopolymerization initiator, relative to 100% by weight of the radiation-curable composition. The content of the photopolymerizaition initiator is more preferably 0.005 to 1% by weight, and still more preferably 0.01 to 0.5% by weight.

If the photopolymerization initiator and the thermal polymerization initiator are used in combination as the above-mentioned polymerization initiator, the ratio by weight in the mixed amount of the initiators (thermal polymerization initiator/photopolymerization initiator) is preferably 1 to 100/1, for example. If the ratio of the thermal polymerization initiator is less than 1, the weather resistance may not be improved sufficiently. If the ratio of the thermal polymerization initiator is more than 100, the curable property may be insufficient. The ratio is more preferably 2 to 100/1, and still more preferably 2 to 50/1, and still more preferably 2 to 30/1, and particularly preferably 3 to 20/1, and most preferably 5 to 20/1.

The above-mentioned radiation-curable composition may further contain various additives such as a plasticizer, an ultraviolet absorber, an antioxidant, an inorganic filler, an antifoaming agent, a thickener, a thixotropic agent, a leveling agent, a hindered amine light stabilizer, and a release agent. These additives can be used in usually used form. Selection of the release agent is important when a precise optical material and the like are formed.

Fine particles formed of a metal oxide are preferable as the above-mentioned inorganic filler in view of not deteriorating the optical properties. Examples of such a metal oxide used in the above-mentioned fine particles include oxides such as silicon, titanium, zirconium, hafnium, zinc, iron, antimony, tin, indium, cerium, aluminum, tungsten, niobium, chromium, ruthenium, lanthanum, ytterbium, scandium, and yttrium; and composite oxides thereof. The particle diameter is specified in a range within which the optical properties are not deteriorated, and is preferably 1 nm to 10 $\mu$m.

The above-mentioned antioxidant is not especially limited, and one or two or more species of phosphorus antioxidants or phenolic antioxidants may be used. Examples of the above-mentioned phenolic antioxidants include Sumilizer GM, Sumilizer GS, Sumilizer BHT, Sumilizer S, Sumilizer GA-80, Sumilizer WX-R (each of them is tradename, product of Sumitomo Chemical Co., Ltd.); ADK STAB AO-20, ADK STAB AO-30, ADK STAB AO-40, ADK STAB AO-50, ADK STAB AO-60, ADK STAB AO-70, ADK STAB AO-330 (each of them is tradename, product of ADEKACorp.) ; Antage DBH, Antage DAH, Antage W-400, Antage W-500 (each of them is tradename, product of Kawaguchi Chemical Industry Co., Ltd.); IRGANOX1010, IRGANOX1035, IRGANOX1076, and IRGANOX1135 (product of Ciba Specialty Chemicals) . These may be used singly or in combination of two or more species of them. Among them, ADK STAB AO-60 and IRGANOX1010 are preferably used because of the high color protection effect for a prolonged period. The mixed amount of the above-mentioned phenolic antioxidant is preferably 0.01 to 10% by weight, relative to 100% by weight of a total amount of the above-mentioned radiation-curable composition, for example. The mixed amount is more preferably 0.1 to 5% by weight.

The above-mentioned phosphorus antioxidants are not especially limited. Examples thereof include ADK STAB PEP-4C, ADK STAB PEP-8, ADK STAB PEP-11C, ADK STAB PEP-24G, ADK STAB PEP-36, ADK STAB HP-10, ADK STAB 2112, ADK STAB 260, ADK STAB 522A, ADK STAB 329K, ADK STAB 1178, ADK STAB 1500, ADK STAB C, ADK STAB 135A, ADK STAB 3010, and ADK STAB TPP (each of them is tradename, product of ADEKA Corp.). These may be used singly or in combination of two or more species of them. Among them, ADK STAB 2112 is preferably used because of the high color protection effect for a prolonged period. The mixed amount of the above-mentioned phosphorus antioxidant is preferably 0.01 to 10% by weight relative to 100% by weight of a total amount of the above-mentioned phosphorus antioxidant. The mixed amount is more preferably 0.1 to 5% by weight.

The above-mentioned hindered amine light stabilizer is not especially limited. Examples thereof include ADK STAB LA-52, ADK STAB LA-57, ADK STAB LA-62, ADK STAB LA-67, ADK STAB LA-63P, ADK STAB LA-68LD, ADK STAB LA-77, ADK STAB LA-82, and ADK STAB LA-87 (each of them is tradename, product of ADEKA Corp.) ; Tinubin 111FDL, Tinubin 144, Tinubin 123, and Tinubin 292 (product of Ciba Specialty Chemicals). These may be used singly or in combination of two or more species of them. Among them, ADK STAB LA-52, ADK STAB LA-62, Tinubin 111FDL, and Tinubin 292 are preferably used because of the high color protection effect for a prolonged period.

The mixed amount of the above-mentioned hindered amine light stabilizer is preferably 0.01 to 10% by weight, relative to 100% by weight of a total amount of the above-mentioned radiation-curable composition, for example. The mixed amount is more preferably 0.1 to 5% by weight.

Examples of the above-mentioned release agent include metal soaps such as zinc stearate, calcium stearate, magnesium stearate, lithium stearate, barium stearate, and sodium stearate; fatty acids such as caproic acid, caprylic acid, capric acid, lauric acid, myristic acid, palmitic acid, stearic acid, arachidic acid, behenic acid, lignoceric acid, myristoleic acid, palmitoleic acid, oleic acid, linolic acid, linolenic acid, 12-hydroxy stearic acid, and recinoleic acid; higher alcohols such as lauryl alcohol, stearyl alcohol, and behenyl alcohol; fatty acid esters such as methyl stearate, stearyl stearate, behenyl behenate, and sorbitan monostearate; silicone release agents except for polyether-modified silicone oil such as KF96, KF965, KF410, KF412, KF4701, KF54, KS61, KM244F, KS702, KF725, KS707, andKS800P (each of them is tradename, product of Shin-Etsu Chemical Co., Ltd.); and fluorine surfactants such as PolyFox PF-136A, PF-156A, PF-151N, PF-636, PF-6320, PF-656, PF-6520, PF-651, PF-652, and PF-3320 (each of them is tradename, product

of Omnova Solutions, Inc.). One or two or more species of them may be used. Among them, fatty acids, higher alcohols, fatty acid esters, and fluorine surfactants are preferred because they can exhibit demolding property while retaining sufficient transparency.

The above-mentioned radiation-curable composition can be a thermosetting composition cured at room temperatures or cured by heating, if containing the above-mentioned thermal polymerization initiator and, if necessary, the thermal polymerization accelerator.

If the curable composition is cured at room temperatures, it is preferable that the curing temperature is set to -20 to 50°C, for example. If the curing temperature is less than -20°C, the curing rate may be insufficiently improved, and therefore the productivity and the physical properties of the cured product may not be excellent. If the curing temperature is more than 50°C, the curing rapidly proceeds, which may cause defects such as foaming or crack of the cured product, and warpage of the molded article. The curing temperature is more preferably 0 to 40°C.

The curing temperature is preferably set to 40 to 180°C if heating cures the composition. If the curing temperature is less than 40°C, the curing rate maybe insufficiently improved, and thereby the productivity or the physical properties of the cured product may not be excellent. If the curing temperature is more than 180°C, the curing rapidly proceeds, which may cause defects such as foaming or crack of the cured product, and warpage of the molded article. The curing temperature is more preferably 50 to 150°C, and still more preferably 60 to 120°C.

The radiation-curable composition of the present invention is cured by radiation energy to be a cured product, as mentioned above. Such a curedproduct has an excellent optical property (transparency), and has excellent various physical properties such as light resistance, transparency, curing strength, moldability (smoothness, anti-mold foulingproperty), demolding property, durability, and stain resistance. Therefore, such a cured product can be used particularly preferably in optical members such as LED encapsulant, optical cable, optical waveguide, lens sheets such as prism sheet and lenticular lens sheet, optical film, and optical lens; lighting members such as lighting covering and ornament material; and automobile members such as head lamp component and instrument panel component. As mentioned above, a cured product produced by curing the radiation-curable composition is also one of the preferable embodiments of the present invention.

A particularly preferable embodiment of the above-mentioned curedproduct is an embodiment in which the cured product satisfies an initial light transmittance of 80% or more at a wavelength of 380 nm, and a surface tension of 34 mN/m or less, and a light transmittance retention of 90% or more after 200 hours of accelerated light resistance test. Such a cured product is also one of the preferable embodiments of the present invention. It is particularly preferable that the initial light transmittance at a wavelength of 380 nm, the surface tension, and the light transmittance retention after 200 hours of accelerated light resistance test satisfy the above-mentioned preferable value ranges, respectively. These measurement methods are as mentioned above.

Such a cured product can be produced by curing the above-mentioned radiation-curable composition of the present invention.

The above-mentioned (meth) acrylic cured product has the above-mentioned properties, and therefore can be preferably used in any of these applications. The lens sheet has a complicated shape, and is an application in which demolding property is particularly important in addition to physical properties or durability. Therefore, the (meth)acrylic cured product is particularly preferably used in the lens sheet among the optical members. In the lens sheet, defects such as chip or crack may be generated if great force or prolonged force is applied to the lens sheet at the mold release, which is not desirable. However, the above-mentioned (meth)acrylic cured product is excellent in demolding property as well as in moldability and the like, and therefore can be particularly preferably used in the lens sheet. As mentioned above, a (meth)acrylic cured product produced by curing the above-mentioned (meth)acrylic resin composition is also part of the present invention.

As the lens sheet in which the radiation-curable composition of the present invention is used, preferable is a lens sheet in film or sheet form, in which many lens arrays or microlens arrays each of which is made of the cured product of the radiation-curable composition are arranged on at least one surface of the substrate. The lens array or the microlens array has various shapes depending on the purpose. The lens array has a prism shape, a lenticular lens shape, or a wave shape, for example. The lens array has a cross-sectional shape of isosceles triangle, scalene triangle, trapezoid, semicircle, ellipse, or polygon. It is preferable that the lens sheet has a thickness of 0.1 to 3 mm, and a pitch between the lens arrays is 10 $\mu$m to 0.5 mm.

It is preferable that the substrate of the above-mentioned lens sheet is a sheet or film made of a material having a high light transmittance and a relatively high refractive index. Examples of such a substrate include a glass plate, acrylic resins, polycarbonate resins, polyester resins such as polyethylene terephthalate and polyethylenenaphthalate, MS (acrylic-styrene copolymer) resins, vinyl chloride resins, polystyrene resins, TAC (cellulose triacetate), and cyclo polyolefine resins. Preferably used is a substrate provided with a surface treatment such as corona discharge treatment, ozonization, and priming, for improvement in adhesion of the substrate to the radiation-curable composition.

As a production method of the above-mentioned lens sheet, for example, mentioned may be a method in which the radiation-curable composition is injected into a lens mold on which predetermined lens patterns are formed, and

substrates are overlapped with each other. Then, the composition is irradiated with radiation and then removed from the mold.

In the above-mentioned lens sheet, an additive such as an antioxidant, a yellowing inhibitor, a light stabilizer, a bluing agent, a fluorescent whitening agent, a diffusing agent, and a pigment, may be added in the substrate and/or the radiation-curable composition, if necessary.

Preferable used forms include a form in which the same lens shape as in the above-mentioned lens sheet is formed on at least one surface of an optical sheet or film such as a light guide panel, an isotropic light diffusing sheet, and a reflective polarizing sheet (for example, DBEF produced by Sumitomo 3M).

The radiation-curable composition of the present invention has the above configurations. Therefore, such a curable composition can provide a cured product capable of sufficiently satisfying all of light resistance, optical properties (transparency), curability, stain resistance, demoldingproperty, moldability (smoothness, anti-mold fouling property), and durability. Therefore, such a cured product can be useful inmuchmore applications in addition to optical members, lighting members, and automobile members.

BEST MODES FOR CARRYING OUT THE INVENTION

The present invention will, hereinafter, be described in more detail with reference to Examples, but the present invention is not limited to only these Examples.

Synthesis Example 1

(M-1: Dimethacrylate of NPG-2EO)

Into a flask equipped with a stirring device, a thermometer, a condenser, and an introducing pipe for mixed gas of air and nitrogen were charged an ethylene oxide 2 mol adduct of neopentyl glycol (hereinafter, abbreviated to "NPG-2EO") 192 g, methyl methacrylate (hereinafter, abbreviated to "MMA") 400 g, dibutyltin oxide (hereinafter, abbreviated to "DBTO") 3.84 g, and 4-hydroxy-2,2,6,6-tetramethyl piperidine-N-oxyl (hereinafter, abbreviated to "4H-TEMPO") 19.2 mg. Then, the mixture was stirred and heated to 110°C. Transesterification was performed over 6 hours while removing only methanol generated in the reaction by distilation. MMAwas removed from the obtained reaction liquid by distilation to obtain dimethacrylate of ethylene oxide 2 mol adduct of neopentyl glycol. This dimethacrylate of ethylene oxide 2 mol adduct of neopentyl glycol was defined as compound (M-1).

The obtained compound (M-1) was measured for sulfur atom content by Inductively Coupled Plasma (hereinafter, abbreviated as "ICP"). No sulfur atoms were observed.

Synthesis Example 2

(M-2: Dimethacrylate of NPG-4EO)

Into a flask equipped with a stirring device, a thermometer, a condenser, and an introducing pipe for mixed gas of air and nitrogen were charged an ethylene oxide 4 mol adduct of neopentyl glycol (hereinafter, abbreviated to "NPG-4EO") 280 g, MMA 400g, DBTO 5.60 g, and 4H-TEMPO 28.0 mg. Then, the mixture was stirred and heated to 110°C. Transesterification was performed over 6 hours while removing only methanol generated in the reaction by distilation. MMA was removed from the obtained reaction liquid by distilation to obtain dimethacrylate of ethylene oxide 4 mol adduct of neopentyl glycol. This dimethacrylate of ethylene oxide 4 mol adduct of neopentyl glycol was defined as compound (M-2).

The obtained compound (M-2) was measured for sulfur atom content by ICP. No sulfur atoms were observed.

Synthesis Example 3

(M-3: Dimethacrylate of NPG-6EO)

Into a flask equipped with a stirring device, a thermometer, a condenser, and an introducing pipe for mixed gas of air and nitrogen were charged an ethylene oxide 6 mol adduct of neopentyl glycol (hereinafter, abbreviated to "NPG-6EO") 368 g, MMA400g, DBTO 7.36 g, and 4H-TEMPO 36.8 mg. Then, the mixture was stirred and heated to 110°C. Transesterification was performed over 6 hours while removing only methanol generated in the reaction by distilation. MMA was removed from the obtained reaction liquid by distilation to obtain dimethacrylate of ethylene oxide 6 mol adduct of neopentyl glycol. This dimethacrylate of ethylene oxide 6 mol adduct of neopentyl glycol was defined as compound (M-3).

The obtained compound (M-3) was measured for sulfur atom content by ICP. No sulfur atoms were observed.

Synthesis Example 4

(M-4: Diacrylate of NPG-2EO)

Into a flask equipped with a stirring device, a thermometer, a condenser, and an introducing pipe for mixed gas of air and nitrogen were charged NPG-2EO 192 g, ethyl acrylate 400 g, DBTO 3.84 g, and 4H-TEMPO 19.2 mg. Then, the mixture was stirred and heated to 110°C. Transesterification was performed over 6 hours while removing only ethanol generated in the reaction by the distilation. Ethyl acrylate was removed from the obtained reaction liquid by distilation to obtain diacrylate of ethylene oxide 2 mol adduct of neopentyl glycol. This diacrylate of ethylene oxide 2 mol adduct of neopentyl glycol was defined as compound (M-4).

The obtained compound (M-4) was measured for sulfur atom content by ICP. No sulfur atoms were observed.

Synthesis Example 5

(M-5: Trimethacrylate of TMP-3EO)

Into a flask equipped with a stirring device, a thermometer, a condenser, and an introducing pipe for mixed gas of air and nitrogen were charged an ethylene oxide 3 mol adduct of trimethylol propane (hereinafter, abbreviated to "TMP-3EO") 266 g, MMA 600 g, DBTO 5.32 g, and 4H-TEMPO 26.6 mg. Then, this mixture was stirred and heated to 110°C. Transesterification was performed over 6 hours while removing only methanol generated in the reaction by distilation. MMA was removed from the obtained reaction liquid by distilation to obtain trimethacrylate of ethylene oxide 3 mol adduct of trimethylol propane. This trimethacrylate of ethylene oxide 3 mol adduct of trimethylol propane was defined as compound (M-5).

The obtained compound (M-5) was measured for sulfur atom content by ICP. No sulfur atoms were observed.

Synthesis Example 6

(M-6: Dimethacrylate of NPG-2EO (potassium butoxide catalyst))

Into a flask equipped with a stirring device, a thermometer, a condenser, and an introducing pipe for mixed gas of air and nitrogen were charged NPG-2EO 192 g, MMA 400 g, potassium t-butoxide 3.84 g and 4H-TEMPO 19.2 mg. This mixture was stirred and heated to 110°C. Transesterification was performed over 6 hours while removing only methanol generated in the reaction by distilation. MMA was removed from the obtained reaction liquid by distilation, and the catalyst was removed by rinsing to obtain dimethacrylate of ethylene oxide 2 mol adduct of neopentyl glycol. This dimethacrylate of ethylene oxide 2 mol adduct of neopentyl glycol was defined as compound (M-6).

The obtained compound (M-6) was measured for sulfur atom content by ICP. No sulfur atoms were observed.

Synthesis Example 7

(M-7: 1,6-hexanediol dimethacrylate)

Into a flask equipped with a stirring device, a thermometer, a condenser, and an introducing pipe for mixed gas of air and nitrogen were charged 1, 6-hexanediol 118 g, MMA 400 g, DBTO 2.36 g, and 4H-TEMPO 11.8 mg. This mixture was stirred and heated to 110°C. Transesterification was performed over 6 hours while removing only methanol generated in the reaction by distilation. MMA was removed from the obtained reaction liquid by distilation to obtain 1, 6-hexanediol dimethacrylate. This 1, 6-hexanediol dimethacrylate was defined as compound (M-7).

The obtained compound (M-7) was measured for sulfur atom content by ICP. No sulfur atoms were observed.

Synthesis Example 8

(M-8: NPG dimethacrylate)

Into a flask equipped with a stirring device, a thermometer, a condenser, and an introducing pipe for mixed gas of air and nitrogen were charged sufficiently dehydrated neopentyl glycol 135 g , MMA 400 g, potassium t-butoxide 1.35 g, and 4H-TEMPO 13.5 mg. This mixture was stirred and heated to 110°C. Transesterification was performed over 4 hours while removing only methanol generated in the reaction by distilation. Unreacted MMA was removed from the

obtained reaction liquid by distilation, and unreacted neopentyl glycol, neopentyl glycol monomethacrylate, and catalyst were removed by rinsing to obtain neopentyl glycol dimethactylate. This neopentyl glycol dimethacrylate was defined as compound (M-8).

The obtained compound (M-8) was measured for sulfur atom content by ICP. No sulfur atoms were observed.

Synthesis Example 9

(M-9: Dimethacrylate of NPG-2EO synthesized by dehydration-condensation using paratoluenesulfonic acid)

Into a flask equipped with a stirring device, a thermometer, a condenser, and an introducing pipe for mixed gas of air and nitrogen were charged NPG-2EO 192 g, methacrylic acid (hereinafter, abbreviated to "MAA") 189 g, p-toluene sulfonic acid (hereinafter, abbreviated to "PTS") 7.5g, toluene 50 g, and 4H-TEMPO 19.2 mg. This mixture was stirred and heated to 110°C . Dehydrating esterification reaction was performed over 6 hours while removing water generated in the reaction by distilation. After completion of the reaction, an operation of rinsing and separation of the water layer portion by still standing was repeated 3 times. Then, toluene and unreacted MAA were removed under heating and reduced pressure conditions to obtain dimethacrylate of ethylene oxide 2 mol adduct of neopentyl glycol. This dimethacrylate of ethylene oxide 2 mol adduct of neopentyl glycol was defined as compound (M-9).

The obtained compound (M-9) was measured for sulfur atom content by ICP. The sulfur atom content was 400 ppm.

Synthesis Example 10

(P-1)

Into a flask equipped with a stirring device, a thermometer, a condenser, and a nitrogen gas introducing pipe were charged MMA 190 g, MAA 8.6 g, and toluene 463 g. Nitrogen substitution was performed and the mixture was heated to 70°C. Then, a solution prepared by diluting
2,2'-azobis(2,4-dimethyvaleronitrile)(V-65, product of Wako Pure Chemical Industries, Ltd.) 0.99 g with toluene 50 g was slowly added dropwise, with attention to heat generation.
Reaction was performed at 70°C for 3 hours and further performed at 90°C for 2 hours to complete a radical polymerization.

Then, into the reaction liquid were added methoquinone 0.68 g, glycidyl methacrylate 156 g, tetraphenylphosphonium bromide 2.71 g. The mixture was heated to 100°C while blowing mixed gas of air and nitrogen, and reaction was performed until an acid number became 5 or less. The obtained polymer solution was reprecipitated with n-hexane, and therefrom the n-hexane was removed under reduced pressure. Thereby, a compound (P-1) was obtained.

The obtained compound (p-1) was measured for molecular weight by gel permeation chromatography (GPC), which shows that the number average molecular weight (Mn) was 35000, and the weight average molecular weight (Mw) was 78000.

The obtained compound (P-1) was measured for sulfur atom content by ICP. No sulfur atoms were observed.

Examples 1 to 8, Comparative Examples 1 to 6

The radiation-curable compositions in Examples 1 to 8 and Comparative Examples 1 to 6 were prepared, according to the mixed ratio shown in Table 1 and 2. When each of the compositions was prepared, each component was sufficiently heated and mixed at 95°C and thereby a uniform solution was prepared. The solution was cooled to an ordinary temperature to prepare a transparent composition in which each component was excellently dissolved. Each of the obtained radiation-curable composition was measured for content of ether group in the composition (% by weight), content of sulfonic acid derivatives in the composition (ppm), pencil hardness, initial light transmittance at a wavelength of 380 nm, and light transmittance retention after 200 hours and 300 hours of accelerated light resistance tests, each in the manner as mentioned above. Tables 1 and 2 show the results.

Examples 9 to 16

Radiation-curable compositions in Examples 9 to 16 were prepared according to the mixed ratio shown in Table 1. When each of the compositions was prepared, each component was sufficiently heated and mixed at 95°C and a uniform solution was prepared. The solution was cooled to an ordinary temperature to prepare a transparent composition in which each component was excellently dissolved. Each of the obtained radiation-curable composition was measured for content of ether group in the composition (% by weight), content of sulfonic acid derivatives in the composition (ppm), pencil hardness, initial light transmittance at a wavelength of 380 nm, and light transmittance retention after 200 hours

and 300 hours of accelerated light resistance tests, as mentioned above, as mentioned above. Table 1 shows the results.

[Table 1]

| | | Example 1 | Example 2 | Example 3 | Example 4 | Example 5 | Example 6 | Example 7 | Example 8 | Example 9 | Example 10 | Example 11 | Example 12 | Example 13 | Example 14 | Example 15 | Example 16 |
|---|---|---|---|---|---|---|---|---|---|---|---|---|---|---|---|---|---|
| (A) Component | | M-1 | M-2 | M-3 | M-4 | M-5 | M-6 | M-1 | M-1 | M-1 | M-1 | M-1 | M-1 | M-2 | M-2 | M-2 | M-1, M-8 |
| Addition amount (part by weight) | | 82.5 | 82.5 | 82.5 | 82.5 | 82.5 | 82.5 | 82.5 | 82.5 | 82.5 | 82.5 | 82.5 | 82.5 | 82.5 | 82.5 | 82.5 | 30, 52.5 |
| (B) Component | | PMMA-1 | PMMA-1 | PMMA-1 | PMMA-1 | PMMA-1 | PMMA-1 | P-1 | PMMA-1 | P-1 | P-1 | P-1 | P-1 | PMMA-1 | PMMA-1 | PMMA-1 | PMMA-1 |
| Addition amount (part by weight) | | 17.5 | 17.5 | 17.5 | 17.5 | 17.5 | 17.5 | 17.5 | 17.5 | 17.5 | 17.5 | 17.5 | 17.5 | 17.5 | 17.5 | 17.5 | 17.5 |
| Polymerization initiator | | D-1173 | D-1173 | D-1173 | D-1173 | D-1173 | D-1173 | D-1173 | D-1173 | D-1173 | D-1173 | D-1173 | D-1173 | D-1173 | D-1173 | D-1173 | D-1173 |
| Addition amount (part by weight) | | 0.2 | 0.2 | 0.2 | 0.2 | 0.2 | 0.2 | 0.2 | 0.1 | 0.2 | 0.2 | 0.2 | 0.2 | 0.2 | 0.2 | 0.2 | 0.2 |
| Addition amount of another component (part by weight) | Tinubin 292 | - | - | - | - | - | - | - | - | 1.5 | - | - | - | 1.5 | - | - | - |
| | Tinubin 111FDL | - | - | - | - | - | - | - | - | - | 1.5 | - | 1.5 | - | 1.5 | - | - |
| | ADK STAB 2112 | - | - | - | - | - | - | - | - | - | - | 0.5 | 0.5 | - | - | 0.5 | - |
| Content of ether group (% by weight) | | 22 | 35 | 43 | 24 | 23 | 22 | 22 | 22 | 22 | 22 | 22 | 22 | 35 | 35 | 35 | 8 |
| Content of sulfonic acid derivative (ppm) | | 0 | 0 | 0 | 0 | 0 | 0 | 0 | 0 | 0 | 0 | 0 | 0 | 0 | 0 | 0 | 0 |
| Pencil hardness | | H | HB | B | F | H | H | H | H | H | H | H | H | HB | HB | HB | H |
| Initial light transmittance at 380 nm (%) | | 85 | 86 | 88 | 85 | 83 | 85 | 87 | 90 | 87 | 87 | 87 | 87 | 86 | 86 | 86 | 81 |
| Light transmittance retention (%) | 200hr | 99 | 100 | 99 | 97 | 99 | 99 | 96 | 100 | 99 | 99 | 99 | 100 | 100 | 100 | 100 | 95 |
| | 300hr | 98 | 99 | 98 | 96 | 98 | 98 | 92 | 100 | 98 | 98 | 98 | 99 | 100 | 100 | 100 | 90 |

[Table 2]

| | | Comparative Example 1 | Comparative Example 2 | Comparative Example 3 | Comparative Example 4 | Comparative Example 5 | Comparative Example 6 |
|---|---|---|---|---|---|---|---|
| (A) Component<br>Addition amount (% by weight) | | M-7<br>82.5 | M-8<br>82.5 | M-8<br>78.4 | M-8<br>82.5 | M-8<br>78.4 | M-9<br>82.5 |
| (B) Component<br>Addition amount (% by weight) | | PMMA-1<br>17.5 | PMMA-1<br>17.5 | PMMA-1<br>16.6 | PMMA-1<br>17.5 | PMMA-1<br>16.6 | PMMA-1<br>17.5 |
| Polymerizaion initiator<br>Addition amount (% by weight) | | D-1173<br>0.2 | D-1173<br>0.2 | D-1173<br>0.2 | D-1173<br>1.0 | D-1173<br>1.0 | D-1173<br>0.2 |
| Another component<br>Addition amount (% by weight) | | -<br>- | -<br>- | PEG400<br>5.0 | -<br>- | PEG400<br>5.0 | -<br>- |
| Content of ether group (% by weight) | | 0 | 0 | 5 | 0 | 5 | 22 |
| Content of sulfonic acid derivative (ppm) | | 0 | 0 | 0 | 0 | 0 | 330 |
| Pencil hardness | | *note | 3B | 4B | H | H | H |
| Initial light transmittance at 380 nm (%) | | *note | 60 | 50 | 70 | 55 | 85 |
| Light transmittance retention (%) | 200hr | *note | 92 | 94 | 60 | 91 | 50 |
| | 300hr | *note | 83 | 90 | 40 | 70 | 30 |

Descriptions in Tables 1 and 2 are as follows.
"PMMA-1": Polymethyl methacrylate (tradename "SUMIPEX LG-6A", Sumitomo Chemical Co., Ltd.)
"D-1173": 2-hydroxy-2-methyl-1-phenylpropane-1-one (photopolymerization initiator, tradename "Darocur-1173", product of Ciba Specialty Chemicals)
"PEG400": polyethylene glycol with an average molecular weight of 400 (product of Wako Pure Chemical Industries, Ltd.)
"* note": showing that the measurement could not be performed because the cured product was in gel form (insufficient curing).

Tables 1 and 2 show that there is a large difference in initial light transmittance between the compositions in Examples 1 to 16 and the compositions in Comparative Examples 3 and 5. That is, each of the compositions in Examples 1 to 16 shows an initial light transmittance of 80% or more, but the compositions in Comparative 3 and 5 show initial light transmittances of 50 and 55%, respectively. Each of the radiation-curable compositions in Examples 1 to 16 has an ether structure in the (meth)acrylic esterified product. In contrast, each of the radiation-curable composition in Comparative Examples 3 and 5 has no ether structure in the (meth) acrylic esterified product. This shows that the presence of the (meth) acryloyl group in the ether structure-containing compound can more sufficiently improve the transmittance. In Comparative Examples 3 and 5, it would appear that the compound containing the ether structure havingno (meth) acryloyl group causes phase separation when cured and thereby the transmittance is lowered.

Synthesis Example 11

(M-11: Dimethacrylate of NPG-8EO)

Into a flask equipped with a stirring device, a thermometer, a condenser, and an introducing pipe for mixed gas of air and nitrogen were charged an ethylene oxide 8 mol adduct of neopentyl glycol (hereinafter, abbreviated to "NPG-8EO") 456 g, MMA 400 g, DBTO 9.12 g, and 4H-TEMPO 45.6 mg. Then, the mixture was stirred and heated to 110°C. Transesterification was performed over 6 hours while removing only methanol generated in the reaction by distilation. MMA was removed from the obtained reaction liquid by distilation to obtain dimethacrylate of ethylene oxide 8 mol adduct of neopentyl glycol. This dimethacrylate of ethylene oxide 8 mol adduct of neopentyl glycol was defined as compound (M-11).

The obtained compound (M-11) was measured for sulfur atom content by ICP. No sulfur atoms were observed.

Synthesis Example 12

(M-12: 1, 9-nonanediol dimethacrylate)

Into a flask equipped with a stirring device, a thermometer, a condenser, and an introducing pipe for mixed gas of air and nitrogen were charged 1, 9-nonanediol 160 g, MMA 400 g, DBTO 3.20 g, and 4H-TEMPO 16.0 mg . Then, the mixture was stirred and heated to 110°C. Transesterification was performed over 6 hours while removing onlymethanol generated in the reaction by distilation. MMA was removed from the obtained reaction liquid by distilation to obtain 1, 9-nonanediol dimethacrylate. This 1, 9-nonanediol dimethacrylate was defined as compound (M-12).

The obtained compound (M-12) was measured for sulfur atom content by ICP. No sulfur atoms were observed.

Synthesis Example 13

(M-13: Neopentyl glycol dimethacrylate)

Into a flask equipped with a stirring device, a thermometer, a condenser, and an introducing pipe for mixed gas of air and nitrogen were charged neopentyl glycol 104 g, methacrylic acid 258 g, p-toluene sulfonic acid 3.62 g, toluene 181 g, and 4H-TEMPO 10.4 mg. The mixture was stirred and heated to 110°C.
Dehydrating esterification was performed over 6 hours while removing water generated in the reaction by distilation. After completion of the reaction, residual acids were neutralized by adding a 5% by weight aqueous solution of sodium hydroxide to the reaction solution. Then, immediately, the water layer was removed with a separating funnel. Then, the solution of the residual layer was rinsed until showing a pH of 7.5 or less. Toluene was removed from the reaction solution under heating and reduced pressure conditions to obtain neopentyl glycol dimethacrylate. This neopentyl glycol dimethacrylate was defined as compound (M-13).

The obtained compound (M-13) was measured for sulfur atom content by ICP. The sulfur atom content was 500 ppm.

Examples 17 to 26, Comparative Examples 7 to 12

Curable compositions in Examples 17 to 26 and Comparative Examples 7 to 12 were prepared according to the mixed ratio shown in Tables 3 and 4. When each of the compositions was prepared, each component was sufficiently heated and mixed at 95°C and a uniform solution was prepared. The solution was cooled to an ordinary temperature to prepare a transparent composition in which each component was excellently dissolved. Each of the obtained curable composition was measured for content of ether group, content of sulfonic acid derivatives, surface tension, initial light transmittance at a wavelength of 380 nm, and light transmittance retention after 200 hours of accelerated light resistance test, each in the manner as mentioned above. Also, the stain resistance and demolding property were evaluated as follows. Tables 3 and 4 show the results.

"Stain resistance"

1. Preparation of cured product (specimen)

A specimen was prepared in the same manner as in the above-mentioned preparation of the cured product (specimen) in the measurement of the initial light transmittance at a wavelength of 380 nm.

2. Evaluation of stain resistance

The above-mentioned cured product surface was soiled with a black oil pen (product of ZEBRA CO., LTD, tradename "Hi-Mackee (thick)") and left at 20°C for 24 hours. Then, the soil by the black oil pen was wiped off with a lacquer thinner (tradename, product of Asahipen Corp.). The state of the film surface after the soil was wiped off and checked by eye observation. Then, the film was evaluated according to the following standards.

| | |
|---|---|
| Excellent (success): | The soil did not remain at all. |
| Good (success): | The soil hardly remained. |
| Average (success): | The soil slightly remained. |
| Poor (failure): | The soil considerably remained. |
| Bad (failure): | The surface was damaged with the lacquer thinner, resulting in bad appearance. |

"Demolding property"

Evaluation of demolding property

The curable composition was injected between a lens sheet metal mold and an acrylic resin plate (0.2mm in thickness). The curable composition was adjusted so as to have a thickness of 0.2 mm and then cured enough by being irradiated with ultraviolet radiation of irradiation hardness of 43mJ/cm$^2$·second for 93.2 seconds at a dominant wavelength of 365 nm, using 250 W extra high pressure mercury lamp under 25°C atmosphere. The obtained lens sheet was evaluated for easiness and the state of the sheet when the sheet was removed from the lens sheet metal mold under 25°C atmosphere.

| | |
|---|---|
| Good (success): | The lens sheet could be removed easily and neither chip nor crack was observed on the lens sheet after removed. |
| Average (success): | Neither chip nor crack was observed on the lens sheet after removed, and the removal needed the strength. |
| Poor (failure): | Chip and/or crack were/was observed on the lens sheet after removed. |
| Bad: (failure) : | The lens sheet stuck to the mold and could not be removed. |

[Table 3]

| | Example 17 | Example 18 | Example 19 | Example 20 | Example 21 | Example 22 | Example 23 | Example 24 | Example 25 | Example 26 |
|---|---|---|---|---|---|---|---|---|---|---|
| (A) Component<br>Addition amount (part by weight) | M-1<br>87.5 | M-2<br>87.5 | M-2<br>87.5 | M-3<br>87.5 | M-4<br>87.5 | M-5<br>87.5 | M-6<br>87.5 | M-2<br>87.5 | M-8<br>87.5 | M-11<br>87.5 |
| (B) Component<br>Addition amount (part by weight) | PMMA-2<br>12.5 | PMMA-2<br>12.5 | PMMA-2<br>12.5 | PMMA-2<br>12.5 | PMMA-2<br>12.5 | PMMA-2<br>12.5 | PMMA-2<br>12.5 | PMMA-2<br>12.5 | PMMA-2<br>12.5 | PMMA-2<br>12.5 |
| Polymerization initiator<br>Addition amount (part by weight) | D-1173<br>0.2 | D-1173<br>0.2 | D-1173<br>0.2 | D-1173<br>0.2 | D-1173<br>0.2 | D-1173<br>0.2 | D-1173<br>0.2 | D-1173<br>0.2 | D-1173<br>0.2 | D-1173<br>0.2 |
| Polyether modified silicone oil<br>Addition amount (part by weight) | BYK-307<br>0.5 | BYK-307<br>0.5 | BYK-307<br>2.0 | BYK-307<br>0.5 | BYK-307<br>0.5 | BYK-307<br>1.0 | BYK-307<br>0.5 | KF-351<br>1.0 | BYK-307<br>2.0 | -<br>- |
| Content of ether structure (% by weight) | 23 | 37 | 38 | 46 | 26 | 25 | 23 | 37 | 1 | 52 |
| Content of sulfonic acid derivative (ppm) | 0 | 0 | 0 | 0 | 0 | 0 | 0 | 0 | 0 | 0 |
| Surface tension (mN/m) | 34 | 32 | 30 | 32 | 34 | 32 | 34 | 30 | 34 | 32 |
| Antifouling property | Good | Good | Excellent | Excellent | Good | Good | Good | Excellent | Excellent | Good |
| Initial light transmittance at 380nm (%) | 85 | 86 | 85 | 88 | 85 | 84 | 85 | 86 | 85 | 86 |
| Light transmittance retention (%) | 99 | 100 | 95 | 99 | 98 | 95 | 99 | 98 | 91 | 98 |
| Releasability | Good | Good | Good | Good | Good | Good | Good | Good | Good | Good |

[Table 4]

| | Comparative Example 7 | Comparative Example 8 | Comparative Example 9 | Comparative Example 10 | Comparative Example 11 | Comparative Example 12 |
|---|---|---|---|---|---|---|
| (A) Component Addition amount (part by weight) | M-8 87.5 | M-8 87.5 | M-8 87.5 | M-8 87.5 | M-12 87.5 | M-13 87.5 |
| (B) Component Addition amount (part by weight) | PMMA-2 12.5 | PMMA-2 12.5 | PMMA-2 12.5 | PMMA-2 12.5 | PMMA-2 12.5 | PMMA-2 12.5 |
| Polymerization initiator Addition amount (part by weight) | D-1173 0.2 | D-1173 0.2 | D-1173 0.2 | D-1173 0.2 | D-1173 0.2 | D-1173 0.2 |
| Another component Addition amount (part by weight) | - - | KF-965 0.5 | X-22-164C 0.5 | Paraffin 130 0.5 | - - | - - |
| Content of ether structure (% by weight) | 0 | 0 | 0 | 0 | 0 | 0 |
| Content of sulfonic acid derivative (ppm) | 0 | 0 | 0 | 0 | 0 | 435 |
| Surface tension (mN/m) | 38 | 32 | 34 | 34 | 34 | 38 |
| Antifouling property | Poor | Good | Good | Good | Good | Poor |
| Initial light transmittance at 380nm (%) | 86 | 50 | 60 | 50 | 50 | 86 |
| Light transmittance retention (%) | 92 | 98 | 91 | 80 | 60 | 50 |
| Releasability | Bad | Average | Average | Average | Good | Bad |

Descriptions in Tables 3 and 4 are as follows.
"PMMA-2": Polymethyl methacrylate (tradename "SUNIPEX MM-A", product of Sumitomo Chemical Co., Ltd.)
"D-1173": 2-hydroxy-2-methyl-1-phenylpropane-1-one (photopolymerization initiator, tradename "Darocur 1173", product of Ciba Specialty Chemicals.)
"BYK-307": tradename, polyether-modifiedpolydimethylsiloxane (product of BYK-Chemie-Japan-KK. company)
"KF-351": tradename, polyether-modified silicone oil (product of Shin-Etsu Chemical Co., Ltd.)
"KF-965": tradename, dimethyl silicone oil (product of Shin-Etsu Chemical Co., Ltd.)
"X-22-164C": tradename, methacryl-modifined solicone oil (product of Shin-Etsu Chemical Co., Ltd.)
"Paraffin 130": Paraffin wax (tradename "paraffin wax 130", product of NIPPON SEIRO Co., Ltd.)

Synthesis Example 14

(M-14: Dimethacrylate of NPG-7.5EO)

Into a glass flask equipped with a stirring device, a thermometer, a condenser, an introducing pipe for mixed gas of air and nitrogen were charged an ethylene oxide 7.5 mol adduct of neopentyl glycol (hereinafter, abbreviated to "NPG-7.5EO") 430 g, methyl methacrylate (MMA) 800g, dibutyltin oxide (DBTO) 6.5g, and 4-hydroxy 2,2,6,6-tetramethyl piperidine-N-oxyl(4H-TEMPO) 0.043g. The mixture was stirred and heated to 110°C. Transesterification was performed over 8 hours while removing only methanol generated in the reaction. MMA was removed from the obtained reaction liquid by distilation to obtain dimethacrylate of ethylene oxide adduct of neopentyl glycol. This dimethacrylate of ethylene oxide adduct of neopentyl glycol was defined as compound (M-14).

The obtained compound (M-14) was measured for sulfur atom content by ICP. No sulfur atoms were observed.

Synthesis Example 15

(M-15: Dimethacrylate of NPG-9EO)

Into a reaction device similar to that in Synthesis Example 1 were charged an ethylene oxide adduct 9.0 mol of neopentyl glycol (hereinafter, abbreviated to "NPG-9EO") 520 g, MMA 960 g, DBTO 7.8 g, and 4H-TEMPO 0.052 g. The mixture was stirred and heated to 110°C. Transesterification was performed over 8 hours while removing only methanol generated in the reaction. MMA was removed from the obtained reaction liquid by distilation to obtain dimethacrylate of ethylene oxide adduct of neopentyl glycol. This dimethacrylate of ethylene oxide adduct of neopentyl glycol was defined as compound (M-15).

The obtained compound (M-15) was measured for sulfur atom content by ICP. No sulfur atoms were observed.

Synthesis Example 16

(M-16: Dimethacrylate of PEG200)

Into a reaction device similar to that in Synthesis Example 1 were charged polyethylene glycol (number average molecular weight 200, average molar number of addition of ethylene oxide: 4 mol) 200 g, MMA 400 g, DBTO 5.2 g, and 4H-TEMPO 0.020 g.
The mixture was stirred and heated to 110°C.
Transesterification was performed over 8 hours while removing only methanol generated in the reaction. MMA was removed from the obtained reaction liquid by distilation to obtain polyethylene glycol dimethacrylate. This polyethylene glycol dimethacrylate was defined as compound (M-16).

The obtained compound (M-16) was measured for sulfur atom content by ICP. No sulfur atoms were observed.

Synthesis Example 17

(M-17: Dimethacrylate of PEG400)

Into a reaction device similar to that in Synthesis Example 1 were charged polyethylene glycol (number average molecular weight 400, average molar number of addition of ethylene oxide: 9 mol) 400 g, MMA 800 g, DBTO 6.3 g, and 4H-TEMPO 0.040 g. The mixture was stirred and heated to 110°C. Transesterification was performed over 8 hours while removing only methanol generated in the reaction. MMA was removed from the obtained reaction liquid by distilation to obtain polyethylene glycol dimethacrylate. This polyethylene glycol dimethacrylate was defined as compound (M-17).

The obtained compound (M-17) was measured for sulfur atom content by ICP. No sulfur atoms were observed.

Synthesis Example 18

(M-18: Diethylene glycol dimethacrylate)

Into a reaction device similar to that in Synthesis Example 1 were charged diethylene glycol 100 g, MMA 200 g, DBTO 2.6 g, and 4H-TEMPO 0.010 g. The mixture was stirred and heated to 110°C. Transesterification was performed over 8 hours while removing only methanol generated in the reaction. MMA was removed from the obtained reaction liquid by distilation to obtain diethylene glycol dimethacrylate. This polyethylene glycol dimethacrylate was defined as compound (M-18).

The obtained compound (M-18) was measured for sulfur atom content by ICP. No sulfur atoms were observed.

Synthesis Example 19

(M-19: Dimethacrylate of NPG-4EO (ion exchange resin catalyst))

Into a reaction device similar to that in Synthesis Example 1 were charged NPG-4EO 300 g, methacrylic acid (MAA) 180 g, a cation exchange resin rinsed with toluene and water and dried (product of Organo Corp., tradename "AMBERLYST 15D") 25 g, toluene 50 g, and 4H-TEMPO 0.030 g. This mixture was stirred and heated to 110°C. Dehydrating esterification was performed over 8 hours while removing water generated in the reaction. After completion of the reaction, the cation exchange resin was removed through filtration, and toluene and unreacted MAA were removed under heating and reduced pressure conditions to obtain dimethacrylate of ethylene oxide adduct of neopentyl glycol. This dimethacrylate of ethylene oxide adduct of neopentyl glycol was defined as compound (M-19).

The obtained compound (M-19) was measured for sulfur atom content by ICP, and 10 ppm of sulfur atom was observed.

Synthesis Example 20

(M-20: Dimethacrylate of NPG-4EO (p-toluenesulfonic acid catalyst))

Into a reaction device similar to that in Synthesis Example 1 were charged NPG-4EO 300g, methacrylic acid (MAA) 180 g, p-toluenesulfonic acid 3 g, toluene 50 g, and 4H-TEMPO 0.030 g. The mixture was stirred and heated to 110°C. Dehydrating esterification was performed over 8 hours while removing water generated in the reaction. After completion of the reaction, rinsing operation was performed 5 times, and toluene and unreacted MAA were removed under heating and reduced pressure conditions to obtain dimethacrylate of ethylene oxide adduct of neopentyl glycol. This dimethacrylate of ethylene oxide adduct of neopentyl glycol was defined as compound (M-20).

The obtained compound (M-20) was measured for sulfur atom content by ICP, and 96 ppm of sulfur atom was observed.

Example 27

Into a glass flask equipped with a stirring device, a thermometer, a condenser, an introducing pipe for mixed gas of air and nitrogen were charged 90 parts of the compound (M-14) obtained in Synthesis Example 14, polymethacrylate (product of Sumitomo Chemical Co., Ltd. tradename "SUMIPEX LG-6A") 10 parts by weight, a polymerization initiator (product of Ciba Specialty Chemicals, tradename "Darocur D-1173") 0.2 parts by weight. The mixture was stirred for 2 hours at 90°C to obtain a uniform (meth) acrylic resin composition.

The obtained (meth) acrylic resin composition was measured for content of ether structure, content of sulfur atom derived from the sulfonic acid and/or the sulfonic ester (content of sulfonic acid derivative), each in the manner as mentioned above. Also a cured product obtained by curing this resin composition was measured for glass transition temperature, cure shrinkage ratio and initial light transmittance each in the manner as mentioned above, and evaluated for moldability, demolding property, and durability. Table 5 shows the results.

"Moldability: Smoothness and anti-mold fouling property"

1. Preparation of cured product (specimen)

A sheet cured product (specimen) was prepared in the same manner as in the above-mentioned preparation of the curedproduct (specimen) in the measurement of the cure shrinkage ratio.

2. Evaluation of moldability A (smoothness)

The above-mentioned sheet cured product was evaluated by eye observation according to the following standards.

Good: Neither crack nor shrinkage was generated, and the surface smoothness was excellent.
Poor: Either crack or shrinkage was generated, and the surface smoothness was not excellent.

3. Evaluation of moldability B (anti-mold fouling property)

The glass mold used when the above-mentioned sheet cured product was prepared was evaluated by eye observation according to the following standards.

Good: The glass mold has no fouling and was not soiled at all.
Poor: The glass mold has some sort of fouling and was soiled.

Examples 28 to 39, Comparative Examples 13 to 18

(Meth) acrylic resin compositions were produced in the same manner as in Example 27, except that the compound and the mixed amount described in Tables 5 and 6 were adopted in stead of "the compound (M-14) 90 parts by weight" in Example 27.

Each of the resin compositions was evaluated for various physical properties in the same manner as in Example 27. Tables 5 and 6 show the results.

[Table 5]

| | Example 27 | Example 28 | Example 29 | Example 30 | Example 31 | Example 32 | Example 33 | Example 34 | Example 35 | Example 36 | Example 37 | Example 38 | Example 39 |
|---|---|---|---|---|---|---|---|---|---|---|---|---|---|
| (A) Component | M-14 | M-3 | M-2 | M-15 | M-16 | M-17 | M-19 | M-19, M-20 | M-20 | M-2 | M-2 | M-17 | M-17 |
| Addition amount (part by weight) | 90 | 90 | 90 | 90 | 90 | 90 | 90 | 70, 20 | 90 | 70 | 70 | 70 | 70 |
| (B) Component | PMMA-1 | PMMA-1 | PMMA-1 | PMMA-1 | PMMA-1 | PMMA-1 | PMMA-1 | PMMA-1 | PMMA-1 | PMMA-1 | PMMA-1 | PMMA-1 | PMMA-1 |
| Addition amount (part by weight) | 10 | 10 | 10 | 10 | 10 | 10 | 10 | 10 | 10 | 10 | 10 | 10 | 10 |
| Polymerization initiator | D-1173 | D-1173 | D-1173 | D-1173 | D-1173 | D-1173 | D-1173 | D-1173 | D-1173 | D-1173 | D-1173 | D-1173 | D-1173 |
| Addition amount (part by weight) | 0.2 | 0.2 | 0.2 | 0.2 | 0.2 | 0.2 | 0.2 | 0.2 | 0.2 | 0.2 | 0.2 | 0.2 | 0.2 |
| IBMA (part by weight) | - | - | - | - | - | - | - | - | - | 20 | - | 20 | - |
| CHMA (part by weight) | - | - | - | - | - | - | - | - | - | - | 20 | - | 20 |
| Content of sulfonic acid derivative (ppm) | 0 | 0 | 0 | 0 | 0 | 0 | 9 | 27 | 86 | 0 | 0 | 0 | 0 |
| Content of ether structure (% by weight) | 52.1 | 47.2 | 38.1 | 56.1 | 66.5 | 47.2 | 38.1 | 38.2 | 38.1 | 29.6 | 29.5 | 36.7 | 36.8 |

(continued)

| | | Example 27 | Example 28 | Example 29 | Example 30 | Example 31 | Example 32 | Example 33 | Example 34 | Example 35 | Example 36 | Example 37 | Example 38 | Example 39 |
|---|---|---|---|---|---|---|---|---|---|---|---|---|---|---|
| Physical properties of cured product | Glass transition temperature (ºC) | 24 | 50 | 55 | 10 | 10 | 57 | 55 | 56 | 56 | 86 | 60 | 88 | 59 |
| | Cure shrinkage ratio (%) | 7.4 | 8.5 | 10.8 | 6.5 | 8.6 | 11.8 | 10.7 | 10.7 | 10.8 | 10.2 | 11.8 | 10.9 | 11.9 |
| | Initial light transmittance at 380nm (%) | 91.5 | 90.8 | 90.3 | 92.4 | 92.1 | 91.2 | 90.5 | 90.6 | 90.8 | 90.6 | 90.5 | 90.3 | 90.4 |
| | Moldability A (smoothness) | Good | Good | Good | Good | Good | Good | Good | Good | Good | Good | Good | Good | Good |
| | Moldability B (mold soil property) | Good | Good | Good | Good | Good | Good | Good | Good | Good | Good | Good | Good | Good |
| | Releasability | Good | Good | Good | Good | Good | Good | Good | Good | Good | Good | Good | Good | Good |
| | Light transmittance retention (%) | 100 | 99 | 99 | 100 | 96 | 96 | 98 | 95 | 90 | 98 | 98 | 99 | 99 |

[Table 6]

| | | Comparative Example 13 | Comparative Example 14 | Comparative Example 15 | Comparative Example 16 | Comparative Example 17 | Comparative Example 18 |
|---|---|---|---|---|---|---|---|
| (A) Component<br>Addition amount (part by weight) | | M-18<br>90 | M-18<br>30 | M-2<br>20 | M-2<br>20 | M-16<br>20 | M-16<br>20 |
| (B) Component<br>Addition amount (part by weight) | | PMMA-1<br>10 | PMMA-1<br>10 | PMMA-1<br>10 | PMMA-1<br>10 | PMMA-1<br>10 | PMMA-1<br>10 |
| Polymerization initiator<br>Addition amount (part by weight) | | D-1173<br>0.2 | D-1173<br>0.2 | D-1173<br>0.2 | D-1173<br>0.2 | D-1173<br>0.2 | D-1173<br>0.2 |
| IBMA (part by weight) | | - | - | 70 | - | 70 | - |
| CHMA (part by weight) | | - | 60 | - | 70 | - | 70 |
| Content of sulfonic acid derivative (ppm) | | 0 | 0 | 0 | 0 | 0 | 0 |
| Content of ether structure (% by weight) | | 32.8 | 10.9 | 8.5 | 8.5 | 10.5 | 10.6 |
| Physical properties of cured product | Glass transition temperature (°C) | 85 | 104 | 110 | 65 | 108 | 63 |
| | Cure shrinkage ratio (%) | 13.5 | 13.9 | 8.5 | 13.9 | 9.2 | 14.2 |
| | Initial light transmittance at 380nm (%) | 90.3 | 90.2 | 90.2 | 90.5 | 90.4 | 90.2 |
| | Moldability A (smoothness) | Good | Poor | Poor | Good | Poor | Good |
| | Moldability B (mold soil property) | Good | Poor | Poor | Poor | Poor | Poor |
| | Releasability | Average | Poor | Poor | Average | Poor | Average |
| | Light transmittance retention (%) | 69 | 75 | 90 | 91 | 92 | 92 |

Descriptions in Tables 5 and 5 are as follows.

"PMMA-1": Polymethyl methacrylate (product of Sumitomo Chemical Co., Ltd, tradename "SUMIPEX LG-6A")
"CHMA": Cyclohexyl methacrylate
"IBMA: Isobornyl methacrylate

Example 40 (Example of lens sheet)

Prepared was a lens mold for prism sheet preparation in which prism lines each having a cross-sectional shape of isosceles triangle with a vertical angle of 90° are cut at 50 μm intervals. The composition prepared at the mixed ratio shown in Example 9 was injected into the mold, and covered with an acrylic resin sheet in 200 μm thickness and then spread uniformly with a roll.
The composition was cured enough by being irradiated with ultraviolet radiation of irradiation hardness of 43 $mJ/cm^2$·second for 46.5 seconds in the same manner as in the above-mentioned preparation of the cured product (test specimen). Then, the cured product was removed from the mold to prepare a prism sheet.
The above-mentioned prism sheet was placed on a device for liquid crystal back lights in which a light source, a light source reflector, a reflecting plate, a light guide panel, and a diffusion sheet were disposed, as shown in Fig. 1. Front brightness of emitting light was measured. Then, the above-mentioned prism sheet was subjected to 200 hours of accelerated light resistance test at an irradiation intensity of 90 $mW/cm^2$, a wavelength of 295 to 450nm, a humidity of 70%Rh, and a temperature of 50°C, using a superenergy irradiation testing machine. The prism sheet after the test was placed on the above-mentioned device for liquid crystal back lights, and front brightness of emitting light was measured. No change in brightness was observed. The prism sheet after the test had no yellowness.
The present application claims priority under 35 U.S.C. § 119 to Japanese Patent Application No.2005-243298 filed August 24, 2005, entitled "RADIATION-CURABLE COMPOSITION." The contents of that application are incorporated herein by reference in their entirely.

## Claims

1. A radiation-curable composition that contains 100 ppm or less, on the sulfur content equivalent basis, of a sulfonic acid (salt) and/or a sulfonic ester,
wherein the curable composition comprises a (meth)acrylic esterified product of a compound having no aromatic hydrocarbon structure and having two or more hydroxyl groups in one molecule, and
wherein the (meth)acrylic esterified product has an ether structure represented by the following formula (1):

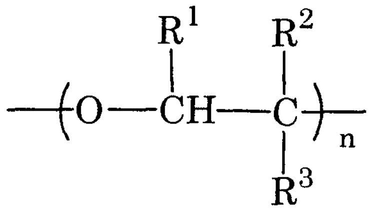
(1)

wherein, in the formula, $R^1$, $R^2$, and $R^3$ are the same or different, and each represent at least one group selected from the group consisting of a hydrogen atom, a methyl group, and an ethyl group; a total number of carbon atoms of $R^1$, $R^2$, and $R^3$ being 0 to 2; n representing an integer of 1 to 100; and
the ether structure is 5% by weight or more relative to 100% by weight of the curable composition,
wherein the amount of photopolymerization initiator is 0.001 to 1% by weight, relative to 100% by weight of the total amount of the radiation-curable composition.

2. The radiation-curable composition according to Claim 1,
wherein the compound having no aromatic hydrocarbon structure and having two or more hydroxyl groups in one molecule is a compound not containing β-hydrogen to the hydroxyl groups.

3. The radiation-curable composition according to Claim 1 or 2,
wherein the (meth)acrylic esterified product is a (meth) acrylic esterified product of a compound prepared by adding an alkylene oxide to the compound having no aromatic hydrocarbon structure and having two or more hydroxyl

groups in one molecule, and
the alkylene oxide is at least one selected from the group consisting of ethylene oxides, propylene oxides, and butylene oxides.

4. The radiation-curable composition according to any of Claims 1 to 3,
wherein the radiation-curable composition comprises a (meth)acrylic ester polymer and/or a (meth)acrylic ester copolymer.

5. The radiation-curable composition according to any of Claims 1 to 4, comprising a polyether-modified silicone oil.

6. A cured product as obtainable by curing the radiation-curable composition of any of Claims 1 to 5, wherein the cured product, obtainable by curing the curable composition by radiation energy of $2J/cm^2$, satisfies the following parameters:

an initial light transmittance of 80% or more at a wavelength of 380 nm; and
a light transmittance retention of 90% or more after 200 hours of accelerated light resistance test.

7. The cured product according to Claim 6, wherein the cured product has a surface tension of 34 mN/m or less.

8. The cured product according to Claim 6 or 7, wherein the cured product has a glass transition temperature of 10 to 90°C and a cure shrinkage ratio of 12% or less.

**Patentansprüche**

1. Strahlenhärtbare Zusammensetzung, welche 100 ppm oder weniger auf Schwefelgehaltäquivalenzbasis einer Sulfonsäure (Salz) und/oder eines Sulfonesters enthält,
wobei die härtbare Zusammensetzung ein (meth)acrylisches verestertes Produkt eines Gemisches ohne aromatische Kohlenwasserstoffstruktur mit zwei oder mehreren Hydroxylgruppen in einem Molekül umfaßt und
wobei das (meth)acrylische veresterte Produkt eine Etherstruktur hat, welche durch folgende Strukturformel (1) dargestellt wird:

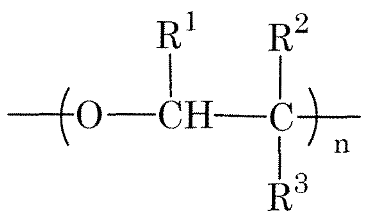

(1)

wobei in der Strukturformel $R^1$, $R^2$ und $R^3$ gleich oder unterschiedlich sind und jeweils mindestens eine Gruppe darstellen, die aus ein Wasserstoffatom, eine Methylgruppe und eine Ethylgruppe bestehenden Gruppe ausgewählt ist, eine Gesamtzahl der Kohlenstoffatome von $R^1$, $R^2$ und $R^3$ 0 bis 2 ist; n eine ganze Zahl von 1 bis 100 darstellt und die Etherstruktur 5 Gewichts-% oder mehr bezüglich 100 Gewichts-% der härtbaren Zusammensetzung beträgt,
wobei die Menge eines Photopolymerisationsinitiators 0,001 bis 1 Gewichtes-% bezüglich 100 Gewichts-% der Gesamtmenge der strahlenhärtbaren Zusammensetzung beträgt.

2. Strahlenhärtbare Zusammensetzung nach Anspruch 1,
wobei das Gemisch ohne aromatische Kohlenwasserstoffstruktur mit zwei oder mehreren Hydroxylgruppen in einem Molekül ein Gemisch ist, das kein β-Wasserstoff in den Hydroxylgruppen enthält.

3. Strahlenhärtbare Zusammensetzung anspruch 1 oder 2,
wobei das (meth)acrylische veresterte Produkt ein (meth)acrylisches verestertes Produkt eines Gemisches ist, das durch Hinzufügen eines Alkylenoxyds zu dem Gemisch ohne aromatische Kohlenwasserstoffstruktur und mit zwei oder mehreren Hydroxylgruppen in einem Molekül hergestellt wird, und

das Alkylenoxyd mindestens ein aus der Ethylenoxyde, Propylenoxyde und Butylenoxyde umfassend Gruppe ausgewähltes ist.

4. Strahlenhärtbare Zusammensetzung nach einem der Ansprüche 1 bis 3,
wobei die strahlenhärtbare Zusammensetzung ein (meth)acrylisches Esterpolymer und/oder ein (meth)acrylisches Estercopolymer umfaßt.

5. Strahlenhärtbare Zusammensetzung nach einem der Ansprüche 1 bis 4, umfassend ein polyether-modifiziertes Silikonöl.

6. Ausgehärtetes Produkt, wie durch Aushärten der strahlenhärtbaren Zusammensetzung nach einem der Ansprüche 1 bis 5 erzeugbar,
wobei das ausgehärtete Produkt, das durch Aushärten der härtbaren Zusammensetzung mit Strahlungsenergie von 2 $J/cm^2$ erzeugt werden kann, folgende Parameter erfüllt:

eine anfängliche Lichtdurchlässigkeit von 80% oder mehr bei einer Wellenlänge von 380 nm und
eine Lichtdurchlässigkeitsbeibehaltung von 90% oder mehr nach 200 Stunden beschleunigten Lichtbeständigkeitstests.

7. Ausgehärtetes Produkt nach Anspruch 6,
wobei das ausgehärtete Produkt eine Oberflächenspannung von 34 mN/m oder weniger besitzt.

8. Ausgehärtetes Produkt nach einem der Ansprüche 6 oder 7, wobei das ausgehärtete Produkt eine Glasübergangstemperatur von 10 bis 90°C und eine Aushärtungsschrumpfrate von 12% oder weniger besitzt.

## Revendications

1. Composition durcissable par rayonnement qui contient 100 ppm ou moins, sur la base d'équivalent de teneur en soufre, d'un acide sulfonique (sel) et/ou d'un ester sulfonique,
dans laquelle la composition durcissable comprend un produit estérifié (méth)acrylique d'un composé ne présentant pas de structure hydrocarbonée aromatique et présentant deux ou plusieurs groupes hydroxyles dans une molécule, et
dans laquelle le produit estérifié (méth)acrylique présente une structure éther représentée par la formule (1) suivante :

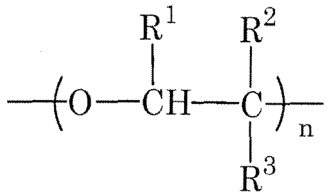

( 1 )

dans laquelle, dans la formule, $R^1$, $R^2$ et $R^3$ sont identiques ou différents, et représentent chacun au moins un groupe choisi dans le groupe constitué d'un atome d'hydrogène, d'un groupe méthyle et d'un groupe éthyle ; un nombre total d'atomes de carbone de $R^1$, $R^2$ et $R^3$ étant de 0 à 2 ; n représentant un nombre entier de 1 à 100 ; et la structure éther est de 5 % en poids ou plus par rapport à 100 % en poids de la composition durcissable,
dans laquelle la quantité d'initiateur de photopolymérisation est de 0,001 à 1 % en poids, rapporté à 100 % en poids de la quantité totale de la composition durcissable par rayonnement.

2. Composition durcissable par rayonnement selon la revendication 1, dans laquelle le composé ne présentant pas de structure hydrocarbonée aromatique et présentant deux ou plusieurs groupes hydroxyles dans une molécule est un composé ne contenant pas d'hydrogène β par rapport aux groupes hydroxyles.

3. Composition durcissable par rayonnement selon la revendications 1 ou 2, dans laquelle le produit estérifié (méth) acrylique est un produit estérifié (méth)acrylique d'un composé préparé par addition d'un oxyde d'alkylène au

composé ne présentant pas de structure hydrocarbonée aromatique et présentant deux ou plusieurs groupes hydroxyles dans une molécule, et l'oxyde d'alkylène est au moins un oxyde choisi dans le groupe constitué des oxydes d'éthylène, des oxydes de propylène et des oxydes de butylène.

**4.** Composition durcissable par rayonnement selon l'une quelconque des revendications 1 à 3, dans laquelle la composition durcissable par rayonnement comprend un polymère d'ester (méth)acrylique et/ou un copolymère d'ester (méth)acrylique.

**5.** Composition durcissable par rayonnement selon l'une quelconque des revendications 1 à 4 comprenant une huile de silicone polyéther-modifiée.

**6.** Produit durci pouvant être obtenu par durcissement de la composition durcissable par rayonnement selon l'une quelconque des revendications 1 à 5, dans lequel le produit durci pouvant être obtenu par durcissement de la composition durcissable par une énergie de rayonnement de 2 $J/cm^2$ satisfait les paramètres suivants :

un coefficient de transmission de lumière initial de 80 % ou supérieur à une longueur d'onde de 380 nm ; et
une rétention de coefficient de transmission de lumière de 90 % ou supérieure après 200 heures d'un test de résistance accéléré à la lumière.

**7.** Produit durci selon la revendication 6, dans lequel le produit durci présente une tension superficielle de 34 mN/m ou inférieure.

**8.** Produit durci selon la revendication 6 ou 7, dans lequel le produit durci présente une température de transition vitreuse de 10 à 90°C et un taux de retrait au durcissement de 12 % ou inférieur.

Fig. 1

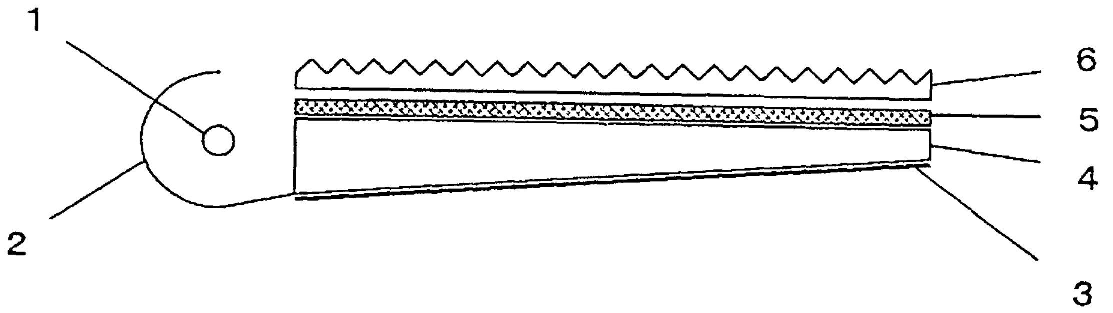

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP HEI06263831 B
- JP HEI04180904 B
- JP 2002003546 A
- JP 2005243298 A